# EUROPEAN PATENT SPECIFICATION

(11) **EP 2 407 917 B1**
(45) Date of publication and mention of the grant of the patent: **12.04.2017**
(21) Application number: 11174208.6
(22) Date of filing: 15.07.2011
(51) Int. Cl.: G06N 5/02, G06Q 40/00

(54) **Method and system for evaluating events**
Verfahren und System zur Beurteilung von Ereignissen
Procédé et système d'évaluation d'événements

(30) Priority: 16.07.2010 US 838135
(43) Date of publication of application: 18.01.2012
(73) Proprietor: SAP SE, 69190 Walldorf (DE)
(72) Inventor: Zeng, Ying, 69190 Walldorf (DE); Sakala, Prathap, 69190 Walldorf (DE); Stastny, Petr, 69190 Walldorf (DE); Sudhalkar, Atul, 69190 Walldorf (DE)
(74) Representative: Richardt Patentanwälte PartG mbB

(56) References cited:
- US-A1- 2009 150 319
- EMMANUEL MULO ET AL: "Monitoring web service event trails for business compliance", SERVICE-ORIENTED COMPUTING AND APPLICATIONS (SOCA), 2009 IEEE INTERNATIONAL CONFERENCE ON, IEEE, PISCATAWAY, NJ, USA, 14 January 2009 (2009-01-14), pages 1-8, XP031625802, ISBN: 978-1-4244-5300-9
- HEMANI A ET AL: "Foundations of a generic design for complex event processing", INFORMATION AND EMERGING TECHNOLOGIES (ICIET), 2010 INTERNATIONAL CONFERENCE ON, IEEE, PISCATAWAY, NJ, USA, 14 June 2010 (2010-06-14), pages 1-6, XP031793114, ISBN: 978-1-4244-8001-2
- Anonymous: "Oracle Complex Event Processing Reference Guide Release 10gR3 (10.3)", ORACLE , 30 September 2008 (2008-09-30), XP002664280, Retrieved from the Internet: URL:http://docs.oracle.com/cd/E13157_01/wl evs/docs30/pdf/reference.pdf [retrieved on 2011-11-21]
- CHRISTOPHER GIBLIN ET AL: 'Regulations Expressed As Logical Models (REALM)', [Online] 01 January 2005, XP055149240 Retrieved from the Internet: <URL:http://www.infsec.ethz.ch/research/pub lications/pub2005/JURIX2005.pdf> [retrieved on 2014-10-28]
- J. Michael Butler: "Benchmarking Security Information Event Management (SIEM)", SANS Analyst Program, 28 February 2009 (2009-02-28), XP055235413, Retrieved from the Internet: URL:https://www.sans.org/reading-room/whit epapers/analyst/benchmarking-security-info rmation-event-management-siem-34755 [retrieved on 2015-12-10]
- Mike Edwards ET AL: "A Conceptual Model for Event Processing Systems A Conceptual Model for Event Processing Systems", IBM Developer Works, 9 February 2010 (2010-02-09), XP055235414, Retrieved from the Internet: URL:http://www.ibm.com/developerworks/libr ary/ws-eventprocessing/ws-eventprocessing- pdf.pdf [retrieved on 2015-12-10]

## Description

### FIELD OF THE INVENTION

The present disclosure relates to the field of data processing. More particularly, the present disclosure relates to a method for determining if an event complies with a requirement by evaluating data values of the event by means of rules.

### BACKGROUND

Particular embodiments generally relate to computer-based business application processing.

Companies face many different regulations from government agencies, other regulatory bodies, and sometimes internal policies within the companies. Companies need to have in place controls and monitoring to ensure compliance. As regulations and market expectations become more stringent and demanding, the number and cost of such controls increases.

Companies typically view compliance monitoring as an exception-driven process. Normal operations continue without interruption; occasionally, compliance issues occur, which raise the risks to the business of violating laws, regulations or even just good business practices. The company's business processes continue, but a user gets alerted, investigates, and corrects any errors or problems.

Accordingly, due in part to the above view, compliance tools conventionally use a scheduled monitoring approach. For example, queries and other methods of monitoring business transactions (both automated and manual) are performed on a set schedule. The business transactions may be queried for at a date/time interval. The results of the queries are then monitored for compliance. The monitoring process imposes a fixed tax or cost on the business operations. That is, whether or not any activity has occurred, the monitoring tax has to be paid. However, reducing the frequency of monitoring increases risks of non-compliance, i.e., if monitoring is performed less frequently, more risks of non-compliance can happen between two consecutive checks.

When a non-compliant transaction is detected after a certain time, damages may have already occurred and can cause large losses for companies. This is because companies expect the business operations to continue and only monitor for non-compliant transactions over certain intervals. When a non-compliant transaction occurs, the business operations continue while the issue is investigated and can still cause losses.

### SUMMARY

It is an object of embodiments of the present invention to provide for an improved method for managing events. The object is solved by the features of the independent claims. Preferred embodiments are given in the dependent claims.

An 'event' as used herein is a data object representing an action or occurrence in the real world or in a computer model thereof. An event can have, for example, the form of an XML file or parts thereof, of a text file, of a binary data object or the like. Preferentially, an event is provided in the form of an XML file or parts thereof.

A 'rule' as used herein is an executable program routine comprising one or more conditions, herein also referred as 'criterion' to evaluate one or more data values. A rule can be, for example, an SQL expression, a piece of Java or C++ code, an ABAP report or the like. Each conditional expression can be used to evaluate a data value of an event. The conditions of a rule are connected e.g. via Boolean operators.

The term 'metadata' as used herein encompasses data relating to a particular event type, e.g. relating to data being indicative of structural, operational or content-related constraints of an event type. For example, the metadata of a particular event type like 'e-mail' may specify fields, also referred to as 'attributes' of said event. The metadata of an event may also specify the data type of a field, a range of permissible data values which can be assigned to a particular event type field or the like. For example, the metadata may specify that an event of type 'customer' may have a field 'name' of type 'String', a field 'customer-ID' of type Integer and various additional fields.

For example, in case events of a particular event type are provided in the form of XML documents, the metadata of said event type may be implemented by an XML schema definition document.

An 'event type' as used herein is a class of events characterized by characteristic metadata, e.g. by a characteristic set of fields. The type of an event may depend, for example, on the data format specifying the event. For example, an event of a first event type may be received in the form of an e-mail while an event of a second event type may be received in the form of a BLOB. An event may represent an object of the real world, e.g. a 'machine condition' or a change thereof. A machine condition can be, for example, temperature, pressure, moisture, throughput and the like. According to some embodiments, an event may represent, for example, a 'customer', 'department' or the like.

A 'high-level system requirement', also referred herein as 'regulation', expresses a high level requirement or operational constraint of a system, e.g. of an ERP system, of a middleware controlling manufacturing processes, controlling business workflows or the like. A 'system' as used herein is any monolithic or distributed set of processing components, IT-resources and/or machines being interoperable with each other and being used to achieve one common goal, e.g. managing financial transactions or managing a manufacturing workflow. Each regulation may be represented by a data object comprising a human readable specification of a real-world requirement or regulation. An example of such a high level system requirement would be that 'the email traffic of a company should be save'. A 'low-level system requirement' expresses a low level requirement or operational constraint of said system which is sufficiently concrete to allow implementation of corresponding program routines. Examples of low-level system requirements being both covered by the high-level system requirement that 'the e-mail traffic of a company should be safe' are: 'the e-mail received or sent by employees of the company must be free of viruses and Trojans' and 'no e-mail sent by an employee must contain any of the sensitive construction plans stored to a particular database XYZ'.

A 'control data object' as used herein is a data object comprising information which specify in a human-readable form some high-level system requirements which may be of relevance, e.g., for a particular company. A 'control data object' may be, for example, a class specified in an object oriented programming language or in ABAP. The expressions 'control' and 'controlled data object' will in the following be used synonymously.

In one aspect, the invention relates to a computer-implemented method comprising:
- storing a plurality of event types, each event type being stored in association with event metadata, the metadata specifying one or more fields of the event type;
- receiving one or more events via a network interface;
- for each of said events:
   - determining an event type in the plurality of event types for said event;
   - determining the event metadata for the determined event type;
   - determining one or more control data objects stored in association with the determined event type, each of the one or more control data objects representing a high-level system requirement;
   - determining event data from said event by reading data values stored in the fields of said event specified by the metadata;
   - for each of the determined control data objects, determining one or more rules stored in association with the control data object, each rule having the function to evaluate compliance of an event with a low-level system requirement being represented by said rule, each rule comprising a first part and a second part, each first part comprising one or more criteria being evaluated against one of the data values of said event; and
   - executing each of the determined rules, thereby evaluating each of the one or more criteria of said rule against one of the data values of said event to determine if the event is non-compliant or compliant with the low-level system requirement of said rule, wherein in case the event is compliant with the low-level system requirement of said rule, the event is also compliant with the high-level system requirement of the control data object for which said rule was determined, and wherein in case the event is non-compliant with the low-level system requirement of said rule, the event is also non-compliant with the high-level system requirement of the control data object for which said rule was determined;
   - in case it was determined that the event is non-compliant with the low-level system requirements of one or more of said rules, the second part of each of said rules is executed.

For example, the event may be specified in an email. Receiving the event may be based on receiving said e-mail by an e-mail client. In dependence on the communication channel via which the event was received, in dependence on the data format and/or in dependence on any other information corresponding to the received event, the type of said event is automatically determined. An event type can be, for example, 'temperature', 'pressure', 'throughput', machine state', 'dimension of a manufactured item', 'customer', 'payment request', 'license agreement' on the like. According to embodiments, an event is received in the form of an e-mail. By evaluating the header of the e-mail, the event type is determined automatically. Once the event type is determined, metadata is determined for the determined event type automatically. For example, each event type may have assigned an event-type-ID and may be stored in association with a particular metadata portion in a relational database. "Storing in association" as used herein comprises any form of storing two data sets or data values in a way that they can be automatically related with each other, e.g. by means of primary and secondary keys or association tables provided by state-of-the-art relational database systems. After having determined the event's metadata, said metadata can be used to extract the payload data of the event, herein also referred to as 'event data'. For example, the metadata of the event type of the received event may be an XML schema specifying which attributes can be extracted from any instance of said event type. Thus, the metadata of an event type can be used to extract the event data.

This is advantageous because this feature may provide for a loose coupling between various event types and the routines used for extracting event data therefrom. Said routines are based on evaluating metadata in order to extract the corresponding fields. The code for extracting the event data can therefore be maintained and kept up to date for a plurality of different event types more easily.

Further, a rule is determined having been stored in association with the event type. Said rule comprises one or more executable routines or pointers to such routines and may comprise one or more 'conditions' or 'criteria', each criteria being operable to evaluate one or more field data values of the event. The low-level system requirement of a rule may be based, for example, on a 'regulatory compliance issue'. The expressions 'low-level system requirement' and 'regulatory compliance issue' will in the following be used synonymously. Said compliance issue may relate e.g. to business-related, logistical or manufacturing workflows and best practices and may be used to guarantee a smoothly and efficiently executed data processing, data integration and/or manufacturing workflow. The event data is then evaluated against the criterion to determine if the event is non-compliant or compliant with the regulatory compliance issue.

Further, specifying a control data object representing a high level system requirement and associating one or more rules to said control data object and assigning one or more event types to said control data object is advantageous for the following reason: in many companies, different departments or manufacturing plants exist which have to consider slightly different technical aspects for ensuring that a high-level system requirement is fulfilled. For example, a car manufacturer may operate a first manufacturing plant producing some first parts of a car wheel while a second manufacturing plant produces some second parts of said car wheel and assembles the first and second car wheel parts. A high-level system requirement may be that the overall dimensions of the wheel have to fit within a particular size range to ensure a desired quality level. The size of said wheel may be affected by the size of the first as well as by the size of the second wheel parts.

Embodiments of the invention allow the employees of both the first and the second plant to respectively specify event types, events and rules for monitoring and controlling the dimensions of their respectively produced wheel parts, thus ensuring the overall high level requirement that the dimensions of the final wheel are within a predefined size range. For example, one or more first event types respectively representing the event of finishing the manufacturing of one of the first wheel parts and one or more second event types respectively representing the event of finishing the manufacturing of one of the second wheel parts may be specified. Each events of said first and second event types may comprise the dimensions of the wheel parts as actually manufactured. At least one field, e.g. 'width', 'diameter' and the like is specified in the metadata of said first or second event types. In addition, for each of the first wheel part types a first rule may be specified evaluating that the dimensions of said first wheel part is within a particular size range. If said first rule determines that the respective first wheel part is smaller or larger than permitted by the range specified in the first rule, the rule determines that the corresponding event is non-compliant to e.g. the low-level constraint that 'the width of a first wheel part of type wpt_1f must lie in the range of 3.1-3.5 cm'.

Likewise, for each of the second wheel part types a second rule may be specified evaluating that the dimensions of a respective second wheel part are within a particular size range. If said second rule determines that a second wheel part is smaller or larger than permitted by the range specified in the second rule, said second rule determines that the corresponding event is non-compliant to e.g. the low-level constraint that 'the width of a second wheel part of type wpt_2g must lie in the range of 12.1-12.5 cm'.

The first and second rules are not stored in direct association with a particular first or second event type but are rather stored in association with a control data object. This control data object may represent the high-level system requirement that 'the diameter of the finished wheel part is guaranteed to lie within a range of xy cm'. By assigning a plurality of different rules evaluating the dimensions of different wheel part to said particular control data object, it is possible to take make assertions on compliance or non-compliance of an event with a high-level system requirement although merely having evaluated a low-level system feature.

In addition, according to embodiments the control data objects may relate to different hierarchical levels and allow evaluating the compliance of events in respect to system levels of various different hierarchical levels simultaneously. For example, another control data object may represent the high-level system requirement that the 'finished wheel has quality level A'. By assigning a plurality of first and second rules evaluating compliance of the dimensions of the first and second wheel parts to said control data object, it is possible to guarantee that a quality-A-class wheel has indeed a particular width and height. In addition, it is possible to specify third event types and corresponding rules evaluating e.g. the consistence and quality of the rubber of the wheel tires. Thus, a plurality of different events can collectively evaluated in respect to a variety of different criteria, thus enabling to - by only one single operation step - constraint violation on a plurality of different system levels at the same time. For example the dimension of the first wheel part may be of relevance also for completely different requirements of the manufacturing process related e.g. to optimizing the consumption of material which has nothing to do with end-product quality management. As each rule can be stored in association with a plurality of different control data objects, the evaluation of one single rule may give clues on non-compliance of a variety of different system requirements. This aspect makes embodiments of the invention particularly efficient in terms of processing power consumption.

Thus, embodiments of the invention as claimed allow to specify and implement the evaluation of technical and/or logistic requirements on a low-level and allow subsuming the results gathered on said low level under one high level system requirement.

According to a further embodiment, a plurality of different rules may be implemented and executed in order to guarantee that the e-mail traffic of a company is safe. One or more first rules may be specified for evaluating the content of an e-mail in order to detect malware of various types, e.g. viruses or Trojans. One or more second rules may be implemented and stored in association with said control data object, the second rules applying a filtering routine in order to detect if an employee may communicate sensitive data to unauthorized third parties. Thus, data leakage can be prevented. In addition, the low-level system requirement of data leakage prevention and the low-level system requirement of virus-free e-mails can be subsumed under the high-level system requirement of 'safe e-mail communication'.

According to embodiments, a GUI is provided enabling an administrator of a regulatory compliance system to inspect and configure control data objects and rules having been specified and enabling the administrator to inspect and configure the first and second links between said data objects. This feature is advantageous, as it may allow an administrator to quickly grasp the overall entity-relationship model and the high-level structure of business and/or manufacturing constraints and requirements. According to embodiments, the GUI allows to select one or more GUI elements representing a context data object and to thereby trigger the display of one or more additional GUI elements representing the event types and/or rules stored in association with a particular control data object. Thus, the administrator is empowered to choose which kind of high-level system requirements or 'policies' should be displayed in greater detail by displaying also the rules and corresponding low-level system requirements corresponding to said selected high-level system requirement.

According to embodiments, the first rule part as well as the second rule part is executable, wherein when executing a rule the first rule part evaluating one or more data values of the event is executed the default and during the second rule part is only executed in case said evaluation of returned as result that the event is non-compliant with the low-level system requirement of the rule.

According to further embodiments, the one or more events are stored to a first database, wherein the one or more events are stored to a first table of a first database and the first parts of the rules are stored in a second table of the first database and wherein the first database is operatively coupled to a event handling service, wherein the second part of each of the rules comprises a pointer linking to one or more executable instructions, wherein in case it was determined that the event is non-compliant with the low-level system requirements of one or more of said rules, the pointer of said rule is automatically selected, thereby triggering the execution of said one or more instructions.

That features may be advantageous, because storing the first and the second rule parts in different tables allows distributing the content to different table spaces of the database, thus making the retrieval of the rules more efficient. Using second rule parts comprising pointers to executable routines instead of executable routines may be advantageous, because a plurality of different routines and a plurality of different locations may thus be automatically addressed, thereby further increasing the flexibility of the system. For example, the executable routines referenced by one of the pointers may be an SQL statement, a batch job, an application program or module thereof and the like.

According to further embodiments, upon storing each of the events to the first database a time stamp is stored in association with said event. The received events are collected in the first database during a predefined time period. The execution of the steps of determining the event type, determining the event metadata, determining the one or more control data objects and determining and executing the one or more rules is triggered after said predefined time period has elapsed, said steps being executed selectively on events having a younger time stamp than the predefined time period, said steps being executed by the event handling service. "Having a younger time stamp than the predefined time period" means that having a younger time stamp than a reference moment is calculated as current system time minus the predefined time period. The time stamp time is compared to said reference moment time to determine if the time stamp is younger than the predefined time period.

Said features may be advantageous, because the processing load of the computer system operating the event handling service is reduced. Retrieving events from a database, in particular retrieving events from a remote database via a network may cause considerable network traffic and the initialization and execution of the class is and methods for evaluating data values of the received event may also cause significant processing load. By pooling a plurality of events in the first database, the network traffic as well as the processing load can be reduced.

According to embodiments, determining each of the one or more control data objects comprises: determining a first link between the event type and the control data object; and determining a second link between the control data object and each of the one or more rules. The first link belongs to a plurality of first links connecting event types and control data objects in accordance with a many-to-many relationship. The second link belongs to a plurality of second links connecting control data objects and rules in accordance with a many-to-many relationship, the first and second links being determined dynamically by a control rule assigner module.

This means that one particular event type may be linked to zero, one or a plurality of control data objects and vice versa. Each control data object may be linked to zero, one or a plurality of event types and vice versa. One particular control data object may be linked to zero, one or a plurality of rules and each rule may be linked to zero, one or a plurality of control data objects. Said feature is highly advantageous, because it may increase the flexibility and configurability of the system, thereby allowing specifying an event management system which is operable to automatically react in a very fine-grained manner on a plurality of different events and to a plurality of different system requirements.

This may be highly advantageous, because this feature may provide for a high flexibility and configurability regarding the specification of criteria to be evaluated and regarding the actions and processes which can be triggered automatically in order to prevent or remedy the violation of a rule.

Said features are advantageous for the following reasons: the many-to-many relationships being the basis for the first and/or second links and the connection of event types, control data objects and rules provides for a huge set of possibilities regarding the specification of tuples {n event types; 1 control data object; m rules}. So even given only a limited set of rules, event types and control data objects, a highly complex and fully automated handling of events of different event types can be modeled. For example, a first wheel part type WP1 may be represented by a first event type, a second wheel part type WP2 may be represented by a second event type. For the first wheel part type, at least a first rule R1 is specified being operable to evaluate the field 'diameter' of the first event type. For the second wheel part type, at least a second rule R2 is specified being operable to evaluate the field 'height' of the second event type. The high-level system requirement that the diameter of the finished wheel should be in a particular diameter range can be represented by a control data object CDAO1. CDAO1 is stored in association with the first and the second event type (and possible some additional event types). In addition, the CDAO1 is stored in association with the first and the second rule R1, R2 (and possibly also some additional rules). Thereby, an indirect link is established between the event types and the rules to evaluate events of a particular event type.

Instead of implementing merely control data objects or merely rules which respectively try to cover all eventualities and criteria necessary for appropriate requirements enforcement, a plurality of comparatively fine-grained rules and event types are implemented which can be freely assigned to each other, via the control data objects, thereby reusing existing code and functions, easing maintainability of the software and allowing a tremendous complexity of event management options.

According to embodiments, each of the control data objects is stored in association with a timestamp in the first database, the timestamp being assigned at the moment of storing that control data objects. The events managing service is operable, when determining the rules, to selectively retrieve only rules having been stored in association with a control data object having assigned a younger timestamp then a particular maximum age and selectively use only that rules for evaluating if an event complies to said rule or not. Thus, it is possible to specify new high level system constraints and corresponding control data objects and to evaluate received events only in respect to the question if they comply with said newly defined high-level constraints. Using a timestamp of a control data object instead of a timestamp of a rule may be advantageous, because it is possible to assign existing rules to one or more different control data objects and a time stamp assigned to a rule may therefore not correspond to the moment of specifying a high level system requirement and corresponding control data object.

According to embodiments, each first part of a rule comprises, in addition to the criteria, one or more instructions for evaluating one or more conditions of said rules on one or more data values of events. For example, said one or more data values of the events may be stored in different tables of a relational database having stored therein the received events. The first part of each rule may specify the table names, columns and SQL queries necessary in order to compare the data values stored in said tables with one or more reference values stored within the rule. The second functionality may comprise one or more routines which prohibit a violation of the constraint or which remedy some requirement violations having already taken place. In case the evaluation result returned by the first part of the rule indicates that the one or more criteria of the rule are not fulfilled, the execution of the second rule part is triggered.

According to embodiments, each control data object and each rule is stored in association with a business process and each control data object and each rule is associated with an organization unit data object. Preferentially, the method in addition comprises the step of validating the event data of each of the events to determine if the event data of said event is in a valid format for evaluating. A 'business process' as used herein is a set of one or more process routines having assigned an identifier which can be used to identify the business process and to assign the business process to one or more event types in a database.

According to embodiments, the method further comprises the steps of: determining if a number of events stored in the first database is above a threshold; changing a reference value of at least one of the criteria used to evaluate events if the first database is above the threshold to cause a percentage of events determined to be non-compliant to decrease; and changing the reference value of at least one of the criteria used to evaluate the event if the event data storage is below the threshold to cause the percentage of events determined to be non-compliant to increase. Said features may be advantageous, because they provide for a system whose sensitivity can be dynamically adopted in dependence on a current system state. Thus, it is prohibited that the system becomes overloaded with a plurality of events and it is guaranteed that at least the most important issues can be remedied. For example, a high-level system requirement may be that one time customers should be requested to pay in advance if said one time customer has ordered goods of significant value. In many cases, it may not be possible to determine in advance which kind of threshold is appropriate for triggering a non-compliance event. Said threshold is typically a compromise of different aspects to consider. For example, not requiring a one-time customer to pay in advance may bear some financial risks. On the other side, requesting the customer to pay in advance also for minor amounts will repel some customers and checking an event having been flagged to be an issue to be solved by an employee will cost time and money. Therefore, by dynamically adapting the criteria of the rules used for evaluating compliance of the events in dependence on the number of events having been determined to be non-compliant is highly advantageous. Thus, it is not necessary to determine in advance where the threshold should be to guarantee an optimal workload of issue identification and remediation. Rather, in times of the low workload, it is possible to dynamically lowers the threshold, thereby making the evaluation of the system requirements more strict. In case too many events are evaluated as non-compliance, overloading the employees with too many issue notifications is prohibited. An issue notification is used herein is any form of automated message submitted to a receiver device in order to indicate that a particular event is not compliant with a particular low-level system requirement.

According to embodiments, executing the second part of at least some of the rules comprises outputting remediation information associated with one of the events if said event is determined to be non-compliant.

For example, an e-mail may be submitted automatically to an operator of a computer system, method or machine or an employee of a particular department in order to notify him or her of the non-compliant event. Said notification may comprise a human readable specification of one or more violated low level system requirements and/or of the corresponding violated high level system requirements.

According to embodiments, the event is received from an outside system via a network through an event interface.

According to embodiments, executing the second part of at least some of the rules comprises triggering a workflow to perform predetermined actions for remediating the event if the event is determined to be non-compliant. This may be advantageous, because non-compliance of an event with one or more system requirements cannot only be detected automatically, it may also be resolved automatically. According to embodiments, executing the workflow comprises communicating, by a notifyer module with the outside system to notify the outside system the event was non-compliant with the low-level system requirement of said rule if the event is determined to be non-compliant. According to some embodiments, the outside system is operable to trigger, upon a receipt of said notification, the execution of further processing steps to prohibit and/or remedy processes operations having caused the generation of the non-compliant event. For example, if the outside system is a manufacturing plant having submitted data on the dimension of the parts in the form of events to the event handling service, an operator of said manufacturing plant receiving a notification is empowered to take immediate actions to solve the problem. It may also be the case that a program component hosted on the side of the outside system automatically triggers corresponding actions, e.g. automatically and immediately halts a production process chain.

According to embodiments, the outside system may be a computer system having submitted the event having been determined to be non-compliant in compliance event in respect to a particular rule and corresponding low-level system requirement.

According to some embodiments, the method further comprises the step of receiving and collecting a plurality of evaluated events having been flagged by the rules engine as compliant or as non-compliant with said rule by a consolidation module. The consolidation module analyzes the collected evaluated results and a timestamp stored in association with each of said evaluated events in the first database. In case the consolidation module determines, in dependence on the flags and in dependence on the timestamp of the events, that the respective low-level system requirement of the one or more rules having evaluated the collected events are fulfilled as the events within said collection having the youngest time stamps are flagged as 'compliant', the triggering of an issue remediation workflow is prohibited by the consolidation module.

According to embodiments, each of the rules is assembled dynamically before executing said rule, each of said rules being assembled from a rule template of said rule and from structural data contained in the metadata of the event types of the event to be evaluated, wherein said structural data comprises a mapping of fields of the event type of the event to be evaluated to columns of the first table. Said rule template comprises a placeholder for each of the rule's criteria, the placeholders of each rule being connected to each other via one or more operators, and wherein the assembly comprises inserting into each of the placeholders of said rule template one of the data values retrieved from the first table by creating database queries based on the mapping contained the metadata of the event type of the event to be evaluated. The mapping is herein also referred to as 'rule definition'.

The assembly of the rule is preferentially executed by the rules engine. The assembly comprises inserting into each of the placeholders of said rule template one of the criteria specified in the metadata of the event type of the event to be evaluated. In other words, the mapping maps fields of an event type to structural information specifying from which table or column in a database storing the events can be read. This mapping can be used to specify corresponding SQL queries. For example, the rule template may comprise an SQL query backbone comprising placeholders for the column names corresponding to a particular field and criterion. When assembling a rule, said SQL query placeholders may be automatically filled with the column names comprising data values of the field to be evaluated. Thus, the rule can be filled with data values of the event to be evaluated without explicitly comprising details on the particular database structure such as table names and columns.

Said features may be advantageous, because dynamically assembling a rule from a rule template based on a mapping provides for huge flexibility of the system and separates the specification of the logical backbone of the rule from the particular implementation details of the database.

For example, a rule template may comprise a 'logical backbone' such as:
<<"if A AND BAND C 'younger than 20.03.1978' and D>F and D < 3.000$, then low-level system requirement is fulfilled. Otherwise, execute second part of the rule!">>.

An operator may be, for example, a Boolean operator, an arithmetic operator, and the like. For example, the value 3.000$ being specified in the rule template may specify a maximum allowed payment amount value which is stored at a particular table and column in the first database.

According to embodiments, the pointer and the second rule part referred to by said pointer is selected from the group of pairs comprising: an URL - a program script or application executed upon selection of said URL; an URL in combination with a mobile phone number of a user (268, 269) - program routines for sending a SMS message to said mobile phone number; and an URL in combination with an e-mail address - program routines for sending an e-mail to said e-mail address. The term 'URL' as used herein encompasses any set of data allowing to identify the location of a program routine or interface, e.g. an IP address, an e-mail address, a web service interface or the like.

According to embodiments, the executed workfilows belongs to a plurality of workflows stored to the first database, each workflow being stored in association with an identifier of at least one of the event types, and wherein triggering the workflow when executing the second part of said rule comprises determining the one or more workflows stored in association with the event type of the evaluated event.

In a further aspect the invention relates to a computer-readable storage medium containing instructions for controlling a computer system to perform a method, the method comprising:
- storing a plurality of event types, each event type being stored in association with event metadata, the metadata specifying one or more fields of the event type;
- receiving one or more events via a network interface;
- for each of said events:
   - determining an event type in the plurality of event types for said event;
   - determining the event metadata for the determined event type;
   - determining one or more control data objects stored in association with the determined event type, each of the one or more control data objects representing a high-level system requirement;
   - determining event data from said event by reading data values stored in the fields of said event specified by the metadata;
   - for each of the determined control data objects, determining (907) one or more rules stored in association with the control data object, each rule having the function to evaluate compliance of an event with a low-level system requirement being represented by said rule, each rule comprising a first part and a second part, each first part comprising one or more criteria being evaluated against one of the data values of said event; and
   - executing each of the determined rules, thereby evaluating each of the one or more criteria of said rule against one of the data values of said event to determine if the event is non-compliant or compliant with the low-level system requirement of said rule, wherein in case the event is compliant with the low-level system requirement of said rule, the event is also compliant with the high-level system requirement of the control data object for which said rule was determined, and wherein in case the event is non-compliant with the low-level system requirement of said rule, the event is also non-compliant with the high-level system requirement of the control data object for which said rule was determined;
   in case it was determined that the event is non-compliant with the low-level system requirements of one or more of said rules, the second part of each of said rules is executed.

In a further aspect the invention relates to a computer-system comprising one or more processors; a first database being operatively coupled to the computer-system; an event handling service comprising an event validation module and a control rule assigner module; a rules engine; an event interface; and a computer-readable storage medium comprising instructions specifying the rules engine, the event handling service and the event interface. The event handling service is operable to store a plurality of event types in association with event metadata in the first database, the metadata specifying one or more fields of the event type; to receive one or more events via the network interface. Further, the event handling service is operable, for each of said events, to determine an event type in the plurality of event types for said event; to determine the event metadata for the determined event type; and to determine the event data from said event by reading data values stored in the fields of said event specified by the metadata. The control rule assignment module is operable to determine one or more control data objects stored in association with the determined event type, each of the one or more control data objects representing a high-level system requirement. The rule engine is operable, for each of the determined control data objects, to determine one or more rules stored in association with the control data object, each rule having the function to evaluate compliance of an event with a low-level system requirement being particular to said rule, each rule comprising a first part and a second part, each first part comprising one or more criteria being evaluated against one of the data values of said event; and to execute each of the determined rules, thereby evaluating each of the one or more criteria of said rule against one of the data values of said event to determine if the event is non-compliant or compliant with the low-level system requirement of said rule, wherein in case the event is compliant with the low-level system requirement of said rule, the event is also compliant with the high-level system requirement of the control data object for which said rule was determined, and wherein in case the event is non-compliant with the low-level system requirement of said rule, the event is also non-compliant with the high-level system requirement of the control data object for which said rule was determined; in case it was determined that the event is non-compliant with the low-level system requirements of one or more of said rules, the second part of each of said rules is executed.

In a further aspect, the invention relates to a computer-implemented method comprising:
- determining a plurality of event types, each event type associated with event metadata;
- receiving an event;
- determining an event type in the plurality of event types for the received event;
- determining event metadata for the determined event type;
- determining event data from the event based on the event metadata;
- determining a rule associated with the event type, the rule including a criterion based on a regulatory compliance issue; and
- evaluating, by a computing device, the event data with the criterion to determine if the event is non-compliant or compliant with the regulatory compliance issue.

The expression 'compliance issue' as used herein refers to an event on which a particular action needs to be executed by a user or by a program routine because said event did not comply with at least one low-level system requirements.

According to embodiments, determining the rule further comprises: determining a control data object associated with the event type, the control data object being based on a risk of non-compliance for the regulatory compliance issue; and determining the rule from the control data object.

According to further embodiments, determining the control data object comprises determining a first link between the event type and the control data object; and determining a second link between the control data object and the rule.

According to embodiments, the method further comprises: receiving a definition of the rule, the definition using event metadata for the event type to define the rule used to test when the event is non-compliant or compliant. According to embodiments, the definition comprises the criterion for the rule, wherein the event data is evaluated against the criterion to determine if the event is non-compliant or compliant.

In other words, according to embodiments the metadata comprises information specifying, for a particular event type, the criteria used by the rules in order to test if the event is compliant or non-compliant in respect to a particular low-level system requirement Said information is also referred herein as "rule definition". For example, a who definition may comprise information on the table and column therein a particular data value of an event is stored within a relational database. This feature may be advantageous, because it tremendously increases the flexibility of the system and eases the understanding of the logical concepts of rules by an operator, because the logical backbone overrule is separated from the table structure used for storing the events.

According to embodiments, the control data object and rule are associated with a business process and organization unit data object. An organization unit data object is a data object representing an organization unit.

According to embodiments, the method further comprises: validating the event data from the event to determine if the event data is in a valid format for evaluating.

According to embodiments, the method further comprises storing the event in event data storage, the stored event awaiting evaluation.

According to embodiments, the method further comprises: determining if a number of events stored in the event data storage is above a threshold; changing a value of a criterion used to evaluate events if the event data storage is above the threshold to cause a percentage of events determined to be non-compliant to decrease; and changing the value of the criterion used to evaluate the event if the event data storage is below the threshold to cause the percentage of events determined to be non-compliant to increase.

According to embodiments, the method further comprises outputting remediation information associated with the event if the event is determined to be non-compliant.

According to embodiments, the method further comprises triggering a workflow to perform predetermined actions for remediating the event if the event is determined to be non-compliant. According to embodiments, the event is received from an outside system through an event interface.

According to embodiments, the method further comprises communicating with the outside system to notify the outside system the event was non-compliant with the regulatory issue if the event is determined to be non-compliant.

In a further aspect, the invention relates to a computer-readable storage medium containing instructions for controlling a computer system to perform a method, the method comprising:
- determining a plurality of event types, each event type associated with event metadata;
- receiving an event;
- determining an event type in the plurality of event types for the received event;
- determining event metadata for the determined event type;
- determining event data from the event based on the event metadata;
- determining a rule associated with the event type, the rule including a criterion based on a regulatory compliance issue; and
- evaluating the event data with the criterion to determine if the event is non-compliant or compliant with the regulatory compliance issue.

In a further aspect, the invention relates to an apparatus, e.g. a computer system, comprising:
- one or more computer processors; and
- a computer-readable storage medium containing instructions for controlling the one or more computer processors to perform a method, the method comprising:
   - determining a plurality of event types, each event type associated with event metadata;
   - receiving an event;
   - determining an event type in the plurality of event types for the received event;
   - determining event metadata for the determined event type;
   - determining event data from the event based on the event metadata;
   - determining a rule associated with the event type, the rule including a criterion based on a regulatory compliance issue; and
   - evaluating the event data with the criterion to determine if the event is non-compliant or compliant with the regulatory compliance issue.

In other words, in one embodiment, a method includes determining a plurality of event types where each event type associated with event metadata. An event is received and an event type in the plurality of event types for the received event is determined. The method determines event metadata for the determined event type and event data from the event based on the event metadata. A rule associated with the event type is determined where the rule includes a criterion based on a regulatory compliance issue. A computing device evaluates the event data with the criterion to determine if the event is non-compliant or compliant with the regulatory compliance issue.

In one embodiment, determining the rule includes determining a control data object associated with the event type, the control data object based on a risk of non-compliance for the regulatory compliance issue and determining the rule from the control.

In one embodiment, the event is received from an outside system through an event interface.

In another embodiment, a computer-readable storage medium containing instructions for controlling a computer system to perform a method is provided. The method includes determining a plurality of event types where each event type associated with event metadata. An event is received and an event type in the plurality of event types for the received event is determined. The method determines event metadata for the determined event type and event data from the event based on the event metadata. A rule associated with the event type is determined where the rule includes a criterion based on a regulatory compliance issue. The event data is evaluated with the criterion to determine if the event is non-compliant or compliant with the regulatory compliance issue.

In one embodiment, the method further includes determining a control data object associated with the event type, the control data object based on a risk of non-compliance for the regulatory compliance issue and determining the rule from the control.

In one embodiment, the method further includes triggering a workflow to perform predetermined actions for remediating the event if the event is determined to be non-compliant.

In another embodiment, an apparatus includes one or more computer processors and a computer-readable storage medium containing instructions for controlling the one or more computer processors to perform a method. The method includes determining a plurality of event types where each event type associated with event metadata. An event is received and an event type in the plurality of event types for the received event is determined. The method determines event metadata for the determined event type and event data from the event based on the event metadata. A rule associated with the event type is determined where the rule includes a criterion based on a regulatory compliance issue. The event data is evaluated with the criterion to determine if the event is non-compliant or compliant with the regulatory compliance issue.

The following detailed description and accompanying drawings provide a better understanding of the nature and advantages of the present invention.

### BRIEF DESCRIPTION OF THE DRAWINGS

Fig. 1 depicts an example of a system for providing event-driven regulatory compliance monitoring according to one embodiment.
Fig. 2 depicts a more detailed example of the system according to one embodiment.
Fig. 3 depicts a simplified flowchart of a method for determining a rule for an event according to one embodiment.
Fig. 4 depicts a simplified flowchart of a method for evaluating an event according to one embodiment.
Fig. 5 depicts a simplified flowchart for providing remediation according to one embodiment.
Fig. 6 illustrates hardware of a special purpose computing machine configured with an event-based regulatory compliance system according to one embodiment.
Fig. 7 shows a block diagram of a first computer system comprising an event handling service.
Fig. 8 depicts a flowchart of embodiments of the invention.

### DETAILED DESCRIPTION

Described herein are techniques for event-driven business application processing. In the following description, for purposes of explanation, numerous examples and specific details are set forth in order to provide a thorough understanding of embodiments of the present invention. Particular embodiments as defined by the claims may include some or all of the features in these examples alone or in combination with other features described below, and may further include modifications and equivalents of the features and concepts described herein.

Particular embodiments provide an event-driven architecture for regulatory compliance monitoring. The architecture delivers an efficient cost-effective, real-time or near real-time compliance monitoring. The event-driven approach responds to events as they arise. Normal compliance issues can be detected and responsible users to remediate the issue can be informed. Also, a business workflow may be triggered and preventive and corrective measures can be taken. Thus, event-driven monitoring provides a combination of limited or predictable load on computing systems, fine-grain configurability as to what is to be monitored, and timely monitoring of business activities.

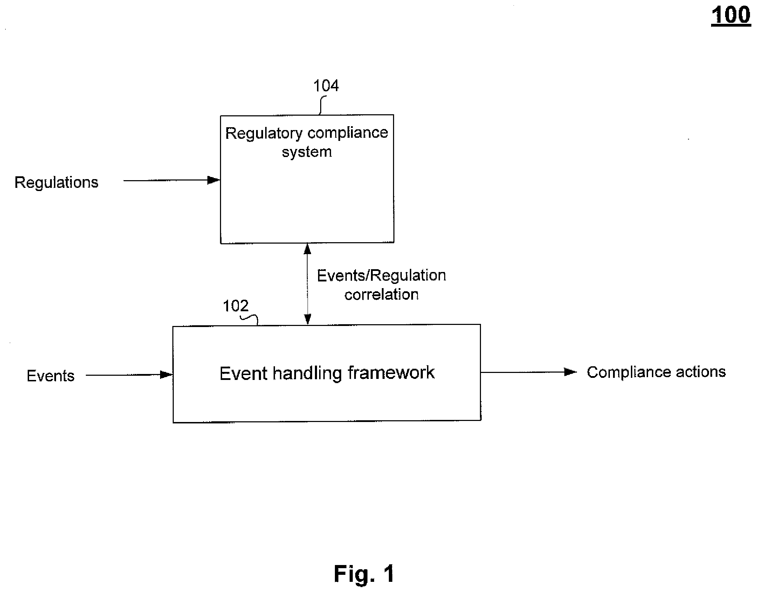

Fig. 1 depicts an example of a system 100 for providing event-driven regulatory compliance monitoring according to one embodiment. System 100 includes an event-handling framework 102 and a regulatory compliance system 104. System 100 may be part of a Governance, Risk Management, Compliance (GRC) system, and automation control system.

Regulatory compliance system 104 allows the set up of data that governs the regulatory compliance. Regulatory compliance system 104 may receive regulations and related information needed for a compliance system. For example, the information that may be configured includes regulation/policy and their requirements, business processes/sub-processes, organization unit hierarchy of the company, risks related to non-compliance with specific regulations like technical regulations and requirements, control data objects to check/detect or mitigate the non-compliance risks, and rules to define automatic control data objects to detect non-compliance cases for business and technical issues. The information set up will be described in more detail below.

Event handling framework 102 is configured to process the events that occur. The event may be information that is generated by a system and sent to event handling framework 102 without a query from event handling framework 102. The event may be generated based on a transaction and includes information about the transaction. The events may occur anywhere and may be sent to event handling framework 102. For example, the event may occur using systems that process business transactions for the company or in an automation system. These systems may be located outside of event-handling framework 102. For example, payment transactions may be processed by a payment transaction system, in an automation system or an industrial control system. A prominent example for the latter one is a control system of a power plant monitoring and controlling the temperature and pressure of a power generating machinery.

Events may be received in different formats because the events may be processed by other systems. Accordingly, event data in an event needs to be interpreted by event handling framework 102. As will be described in more detail below, event metadata for an event type is used to interpret event data in the event. Also, the event is correlated to a rule for a control associated with a regulation. The rule includes one or more criteria that are used to evaluate the event for non-compliance with the regulation. If the event is non-compliant, compliance actions may be performed. For example, a workflow may be triggered to handle the non-compliant event and automatically notify appropriate users, technicians or systems, or perform actions to remediate the issue. Also, the non-compliant event may be output on an interface for a user to view where the user can determine actions to take. This process will be described in more detail below.

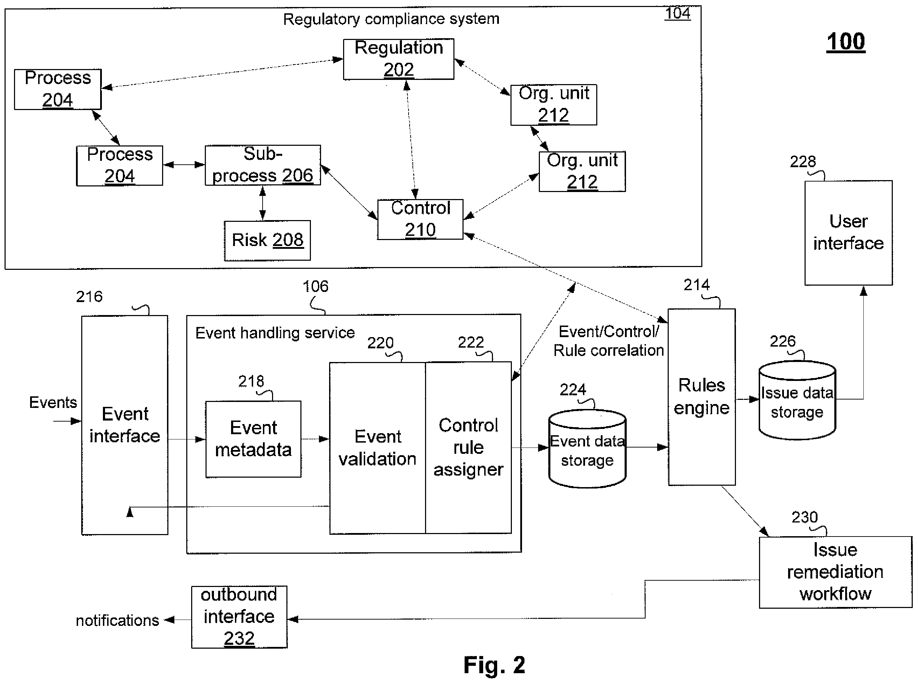

Fig. 2 depicts a more detailed example of system 100 according to one embodiment. The following describes the configuration of regulatory compliance system 104. Then, the handling of events is described using event handling framework 102. Regulatory compliance system 104 is configured such that events can be linked to regulations. As will be described below, event types are used to link events to control data objects and rules for regulations. Also, event metadata for the event types are used to interpret data in the event to allow for evaluation of the event with the rules.

Regulatory compliance system 104 may be used to set up the regulations and their requirements. For example, a database structure may be used to describe the regulation and the regulation's requirements. The database structure is shown conceptually in system 104. Links between different entities in the database structure are shown and will be described below. A person of skilled in the art will appreciate how to link different entities in the database structure as described below based on the teachings and disclosure herein.

A rule may be assigned to one or more control data objects in order to control or restrict behavior. Regulations include policies and rules. General information of the regulations and their requirements may be received from a user and also related documentation may be attached to the regulations. For example, at 202, regulations may be set up. The received regulation may be a set of requirements that need to be complied with for a company. The requirements may be attached to the regulation. In one example, high level English language descriptions of regulations, such as company policies and government regulations, technical constraints, may be grouped together and contain regulation requirements. These may be stored in a time-dependent database table. Additionally, which entities like business or technical entities may be affected by the regulation is determined and are linked to regulations through organizational units (org units) at 212, which will be described in more detail below.

The business processes impacted by all the regulations and their requirements are then set up. One example of a business process may be payment processing. At 204, business processes related to the company are maintained. These are the business activities that the company performs. Business processes may form a process hierarchy. For example, at 206, sub-processes may be created as children of processes.

At 208, risks of non-compliance for different regulations are identified. The risks may be defined as areas where non-compliance could result. The risks may identify business risks of non-compliance to specific regulations.

At 210, control data objects are created to manage risk. For example, control data objects check the compliance of a regulation for different business processes and sub-processes or mitigate the risks of non-compliance. Control data objects describe activities that may be performed to control the risk. For example, the control data objects may be computer programs or computer programs that search for the company's business database and business information systems to identify non-compliant events.

At 212, an organizational structure of the company is also set up. For example, different organizational units may be provided. Different regulations may have different impacts on different organization units and locations. Also, different organization units may also perform different business processes and sub-processes.

The linking of entities in system 104 will now be described. The organizational units are linked to different regulations at 202 because different regulations apply to different organizational units. Each organizational unit may model a set of processes, sub-processes, control data objects, and risks that are assigned to specific regulations based on the relevance to the regulations to each organizational unit.

The processes and sub-processes are used to build a link to daily business activities the organizational unit is performing. Processes and sub-processes may be linked to specific regulations that the business processes or sub-processes may affect with regard to compliance issues for the organizational unit. The relationships between the individual organizational units and business processes that are associated with each organizational unit may be stored in a time-dependent relationship table and the link is shown via dotted lines between processes at 204, regulations at 202, and org. units at 212.

Under the processes and the sub-processes, risks can be created to identify potential non-compliance risks, and control data objects can be defined to handle detection of processing of non-compliance events. The control data objects are then linked to the processes and sub-processes to cover the risks of non-compliance of a certain regulation. Control data objects may be related to the process or sub-process via a relationship table. The control data objects monitor the specific processes and sub-processes. The control data objects may cover different risks. For example, for each risk, a set of control data objects may be linked to the risk. For each process or sub-process, a different set of risks and control data objects may be used. Each org. unit and regulation may have their own set of control data objects, which is designated by the dotted lines between the control data objects at 210 with regulations at 202 or org. units at 212.

Rules are assigned to the control data objects to detect non-compliant events. The rules may be set up at a rules engine 214. How the rules may be processed may be defined by a user. For example, criteria for non-compliant events and filter criteria to select events as non-compliant may be configured. Tables may store the definitions for the criteria. Also, the rule definitions may be changed and are flexible.

The rules define criteria that are used to determine non-compliance for an event. As used, the term criteria may be a single criterion or multiple criteria. In one example, a rule may be "if the invoice item value is higher than $10,000 U.S. dollars and the customer is a one-time customer, then it is a non-compliance event." The criteria in the rule are the amount of money (e.g., $10,000 U.S. dollars) and the customer type (e.g., one-time customer). Different rules may be provided for different control data objects. For example, for each control data object, a set of rules may be linked to the control data object. For example, in case the rules determine, by evaluating one or more events provided by a machinery of a power plant that its temperature has risen above 500°C and its pressure above 20.000 pa, a control system of the power plant may initiate an automated shutdown of the power plant. As will be discussed below, when events occur that are associated with control data objects, the events are evaluated based on the criteria of the rules associated with the control data objects.

To account for events being received from different systems with different data, event types may be configured with event metadata. The metadata is used to interpret the data in the events and will be described in more detail below. Also, the event type is linked to a control and a rule associated with the rule. For example, when the control data objects are configured, the control data objects are linked to specific event types in a database table. The control that an event type is linked to may be associated with different entities depending on the configuration of regulatory compliance system 104. For example, a control for a process or sub-process associated with an org. unit is linked to an event type.

The event type includes metadata describe data that is expected to be included in an event that is generated for the control data object. Metadata may be configured for each event type in system 100. Metadata may also be configured for different event originating systems, which may be identified by partner IDs. For each partner ID, multiple event types may be defined. Also, for each event type for different partner IDs may have different versions configured with specific metadata information.

Event-handling framework 102 will now be described in more detail. Event handling framework 102 is a central engine that performs compliance violation detection and monitoring. The events passed to event handling framework 102 may be triggered based on being flagged as possible compliance issues. For example, systems may flag transactions or events that violate certain limits or thresholds or may violate a proxy law or export control law. The systems may also flag events that violate limits or thresholds of a workflow managing the manufacturing of goods or controlling and operating various machines.

An event interface 216 is provided to receive events. As business transactions occur on different systems, events containing information from these business transactions are received through interface 216. The systems that may trigger the events may be located anywhere, such as outside the company. For example, the systems include enterprise resource planning (ERP) programs, information technology (IT) systems, networking systems, and other systems. A vast range of types of information can be passed to event handling framework 102 in a generic format.

In one embodiment, interface 216 is a generic web service that can accept different types of events. Interface 216 may also be implemented as a remote function call or with other technologies. A remote function call may be an interface for a communication between interface 216 and another external system. The remote function call is the call of a function run on the external system and calls interface 216 to send the event to interface 216.

Event interface 216 passes the event to event handling service 217, which processes the event. The event may include different event data. For example, the event data may include an event type. The event type may a description that identifies the event.

Other information in the event may include an event identifier (ID), partner ID, version, status, date, time, and event detail data. The partner ID may be an identifier for an event originating system that sends events to event handling framework 102. The version may reflect possible changes of event data of one event type over time. Different metadata may be used for different versions. The status may be the current status for the event. The event detail data describes the event. For example, detail data may be arranged in attribute name and value pairs. The attribute name may describe a type of data, such as an item value. The value may include multiple or single values, such as an amount. Events of a different event type contain different attribute name/value pairs. For example, one event related to an invoice may include the attribute names of invoice number, fiscal year, business name, customer name, customer type (one-time customer or not), posting date, invoice item number, and invoice item values. The different attribute names may include attribute properties such as data type, data length, and other attribute properties. The properties define how the values should be formatted.

The event data may be generated by different systems. For event handling service 217 to process these different events, a method to understand what data is in the event may be used. Accordingly, event metadata 218 may be used to determine relevant information from the event that can be processed by rules engine 214. For example, metadata for different event types may be defined. Each event type may include specific metadata and also multiple versions of different metadata. The event metadata describes information that may be found in an event of that event type.

When an event is received, the event is linked to an event type. For example, a field in the event may define the event type. Also, the event may be parsed to determine an event type that is associated with the event. For example, the system the event is received from may be used to determine an event type of the event. Once the event type is determined, the event metadata may be retrieved from a set of tables identified by event type.

An event validation manager 220 is then used to validate the event data included in the event. For example, using the attribute names and attribute properties defined in the event metadata, event validation manager 220 determines the value corresponding to each attribute name. Event validation manager 220 then checks to see if the values are in the correct format and checks if the data type and data length for the value are consistent with the definition in the event metadata. Additionally, event validation manager 220 checks if the event value is consistent with an enumeration and pattern defined in the event metadata. The enumeration may be the set of named values, elements, members or enumerators for the event type. Also, the pattern may be the specified organization of data. If any inconsistency is found, then an error message may be generated and persisted for output to a user. If the validation succeeds, then event processing may continue.

In one embodiment, the following pseudocode may be used to perform validation:

```
 Read table of Event metadata with key event type = incoming event type.
 Read table of Event attribute enumeration with key event type = incoming event type
 Loop over event detail data.
 Read table of incoming event metadata with key
             attribute name = incoming attribute name.
 If found.
  If Incoming attribute value is consistent with
    the data type of attribute in event metadata.
      Event passed check.
  Else.
      Raise error.
  End if.
  If Incoming attribute value length is consistent with
    the data length of attribute in event metadata.
       Event Passed check.
  Else.
      Raise error.
  End if.
  Read table of Event attribute enumeration
    with key event type = incoming event type
           Attribute name = event attribute name.
  If Incoming attribute value is consistent with Event attribute enumeration.
   Event Passed check.
  Else.
   Raise error.
  End if.
 If Incoming attribute value length is consistent with
   the data length of attribute in event metadata.
     Event Passed check.
 Else.
     Raise error.
 End if.
 If Incoming attribute value is consistent with
   the data pattern of attribute in event metadata.
     Event Passed check.
 Else.
  Raise error.
 End if.
 End if.
 End loop.
```

A control rule assigner 222 determines any control data objects and rules for the event. When the event type is determined, a control that is linked to the event type is determined. For example, when the control data objects were configured, they were linked to specific event types. Additional data may also be used to determine the control data object. For example, the event type and a customer ID are used to determine the control data object. In one configuration, the control that is determined is linked to a process or sub-process associated with an org. unit that is associated with the customer ID and event type. The customer ID may be used to determine the org. unit and process/sub-process. Control rule assigner 222 may look up the control that is linked to the event type in a database table configured for regulatory compliance system 104. Once the control is determined, the control is linked to a rule for processing the events. The rule is associated with the event and stored in an event data storage 224.

Rules engine 214 retrieves the event from event data storage 224 and evaluates the event against the rules linked to the event type. The rules include criteria that are used to test for non-compliance. Based on the criteria defined in a rule, rules engine 214 checks if the event is non-compliant and if there is an issue related to non-compliance.

Rules engine 214 uses the event metadata to evaluate the rule for the control data object. While building the rules, data attributes there were defined by the event metadata of one event type are retrieved. A user may have configured the rules, for example, the user may define the selection criteria and define the criteria for non-compliance based on the attributes defined in the event metadata. Also, the user may configure the logic or steps used to process the event data using the event metadata knowledge. In the example below, if the event metadata indicates the specific event type contain attributes such as invoice value and customer type, the user may create a rule for checking if the invoice value of a one time customer (a customer type) exceeds $10K, a rule may be built based on the invoice values and item type. At run time, event handling framework 102 interprets event data based on the metadata definition and compare the data to the criteria defined in the rule. For example, a query and retrieve method is used to query a database table for the event type and retrieve the event metadata for the event type. Then, an execution method is used to execute the rule for the event-based control data object. For example, event data defined by the metadata for the event type is compared to criteria for the rule to determine if the event is non-compliant. If the event is determined to be non-compliant, then it may be handled using various methods that will be discussed below in more detail.

In one example, if an event type includes the metadata for an invoice item value and a customer type, The event metadata is used to determine values for the invoice item and the customer type. The rule may specify that if the value of the invoice item is greater than $10,000 U.S. dollars and the customer type is a one-time customer, then the event is non-compliant. Rules engine 214 determines if the values violate the criteria.

Rules may also be defined for multiple events. For example, an aggregation rule or baseline rule may be defined. The aggregation or baseline rule may be for one specific event type and tests whether the aggregated value of one attribute of multiple events of that event type within a time frame that complies with a specific threshold.

The following pseudo code may be used to evaluate different rules:

### I) Individual event rule

### Example: the invoice amount of one time customer cannot exceed a threshold defined in the rule.

In the rule it is defined for one specific event type, for one specific attribute name I_ATTRIBUTE_NAME (invoice amount) the threshold is I_LIMIT.

```
Check if incoming event type = I_EVENT_TYPE.
 Read table of event detail with key attribute name = 'Customer type'.
 If found.
 Check if attribute value = 'One time customer'.
 If yes, continue.
 If no, exit.
 End if.
 Loop over event detail data where attribute name = I ATTRIBUTE_NAME.
 Sum = Sum + attribute value.
 End of loop.
 Check Sum > I_LIMIT.
 If yes, non compliance exception found.
 If no, continue.
```

### II) Aggregate event rule:

### Example: the invoice amount of same customer accumulated in the last one week cannot exceed a threshold defined in the rule.

```
Read table of event log
    with key event type = event type of incoming event
             Attribute name = 'Customer ID'
             Attribute value = customer ID of incoming event.
              Date > date of incoming event - 7.
              Loop of table of event log.
 If attribute name = 'Invoice amount'.
    Sum = Sum + attribute value.
 End if.
 End loop.
 If Sum > I_THRESHOLD.
 Non compliance exception found.
 Else.
 Continue.
 End if.
```

### III) Event match rule.

### Example: the reference number on the invoice cannot be the same as the sales order number of one specific vendor.

```
Read table of event log
    with key event type = 'Sales Order'
             Attribute name = 'Sales Order No'
             Attribute value = reference number of incoming event.
             If found.
 Raise an error
 Else.
 Continue.
 End if.
```

In one example, events may come in at a high rate that may cause performance issues. For example, the evaluation of events and the creation of issues may take processing power and time. Accordingly, a method may be used to adjust the evaluation by rules engine 214.

A batch job may be started that can scan events from event data storage 224 periodicaliy, such as every 5 minutes. This counts the number of events that occurred during that interval. If the number is higher than a certain threshold, then a value for criteria used by rules engine 214 to determine a non-compliance case may be increased. For example, the value may be increased 5% to 10%. If the number of events decreases, then the value may be reduced again to allow more events to be determined to be non-compliant.

Different methods of remediation may be performed when an event is considered non-compliant. For example, when the event is considered to be an issue, the event may be stored in an issue data storage 226. An issue database table may include the following data: an issue ID, status, priority, and event ID. The issue ID identifies the issue, the status is the action status of the issue, the priority is how important the issue is considered, and the event ID is the event identifier.

One method of remediation is to notify a user. Users may be assigned to individual process/control data object, and organizational units. Issue rules may be used to assign users to perform actions in the event of a non-compliance issue and may be stored in a database table. Based on the result of the analysis, the database table may be accessed based on the rule and users that should take actions for the rule are determined.

Once notified, a user may use a user interface 228 to view the event. The issue information for issue data storage 226 may be displayed to the user through interface 228. For example, user may view the event and determine any workflow tasks and actions that need to be performed to remediate the issues.

Additionally, if a workflow is associated with the issue, then it may be automatically triggered. The workflow may be an automatic process that is designed to perform certain actions. For example, certain users may be notified or actions may be performed automatically. In this case, an issue remediation workflow 230 may be triggered and the workflow performs certain tasks and actions. For example, an outbound interface 232 may be used to send tasks and actions to systems that originated the event or to systems that can remediate the issue. Also, when the workflows are triggered and tasks or actions are forwarded to recipients, a responsible person may handle these issues and try to solve the issues or perform any actions.

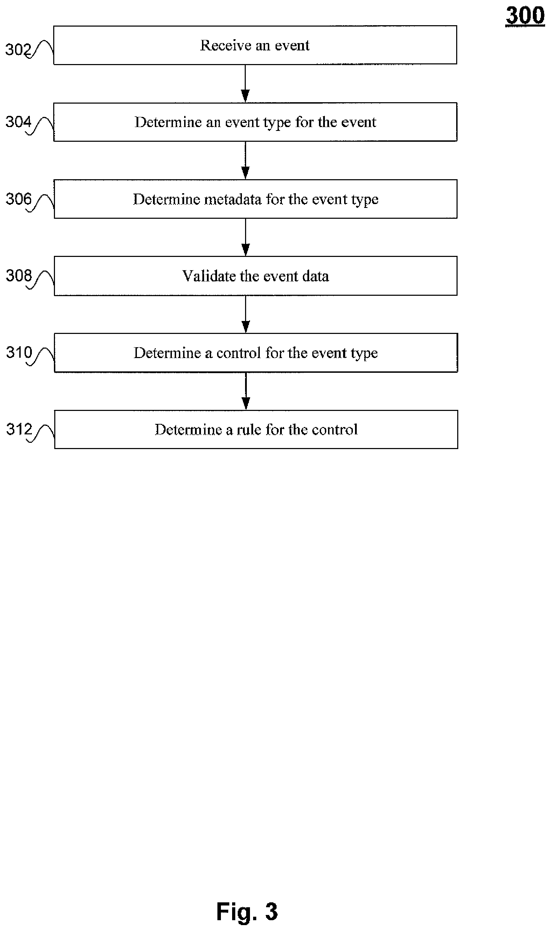

The following method flows for processing events will now be described. Fig. 3 depicts a simplified flowchart 300 of a method for determining a rule for an event according to one embodiment. At 302, an event is received. The event is received through event interface 216.

At 304, event handling service 217 determines an event type for the event. For example, information in the event may define the event type for the event.

At 306, metadata for the event type is determined. The metadata describes the data found in the event.

At 308, event validation manager 220 validates the event data. The validation may determine if the data is in the right format and can be processed by rules engine 214. Also, the validation may filter out invalid data in the event.

At 310, control rule assigner 222 determines a control for the event type. The control may have been linked to the event type during the design of regulatory compliance system 104.

At 312, a rule for the control is determined. The rule may have been linked to the control during the design of rules engine 214.

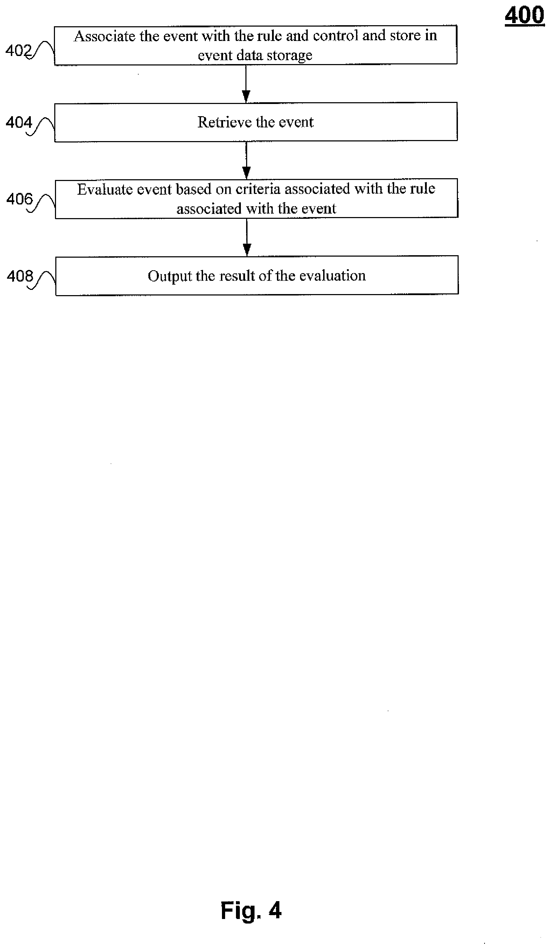

After the rule is determined for the event, then the event may be evaluated. Fig. 4 depicts a simplified flowchart 400 of a method for evaluating an event according to one embodiment. At 402, the event is associated with the rule and control and stored in event data storage 224.

At 404, rules engine 214 retrieves the event. At 406, the event is evaluated based on criteria associated with the rule associated with the event. For example, the metadata is used to determine which data in the event is needed to evaluate the rule. This data is then determined and evaluated against criteria in the rule.

At 408, the result of the evaluation is output. For example, if an issue of non-compliance is determined, then certain remediation actions may be performed.

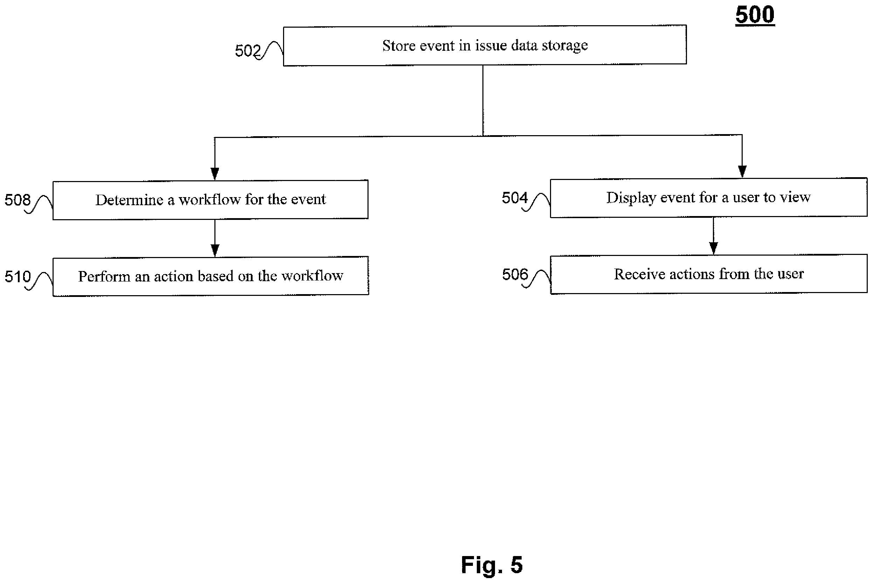

Fig. 5 depicts a simplified flowchart 500 for providing remediation according to one embodiment. At 502, the event is stored in issue data storage 226. Different actions may then be taken. For example, the event may be displayed for a user to view at 504. At 506, actions may be received from the user. For example, the user may analyze the event and determine any actions that need to be performed.

Alternatively, if a workflow exists, at 508 a workflow is determined for the event. For example, different issues are associated with different workflows.

At 510, an action is performed based on the workflow. For example, certain users may be notified with tasks or actions to perform to remediate the issue.

Particular embodiments provide many advantages. For example, regulatory compliance system 104 may be configured in a high level, English language description of company policies. Also, the event handling framework 102 may be configured in a low level language, such as ERP transaction, IT session, and network traffic information. The low level language is a more technical and harder to understand language. The gap may be bridged by defining metadata for different event types that can be used to evaluate events that are received from different systems.

Because the events can be received from different systems, detection is distributed across many systems. The conventional system investigates archived information for signs of policy violations or illegal activities. However, in reality, businesses would like to deal with non-compliant events as they occur. Particular embodiments provide a real-time or near real-time system that maintains policy goals and tracking of issues and remediation in a central area. Compliance is an event-driven approach and particular embodiments are configured to process these events in real-time or near real-time, which limits damage from ongoing business transactions after the non-compliant event occurs. Thus, risk compliance is matched to the actual business reality.

The distributive nature of where various events can occur is a problem for a conventional query-based tool. For example, the query-based tool may not be able to query all different kinds of outside systems. Accordingly, using an event-based system that receives events from distributed systems and can correlate event types to metadata for the event types has many advantages. This also simplifies the compliance because businesses face multiple compliance needs and independently have many policy goals around good management practices. No single person or a single department knows all of these. Thus, a centralized system that can tie all of the policies together provides comprehensive regulatory compliance.

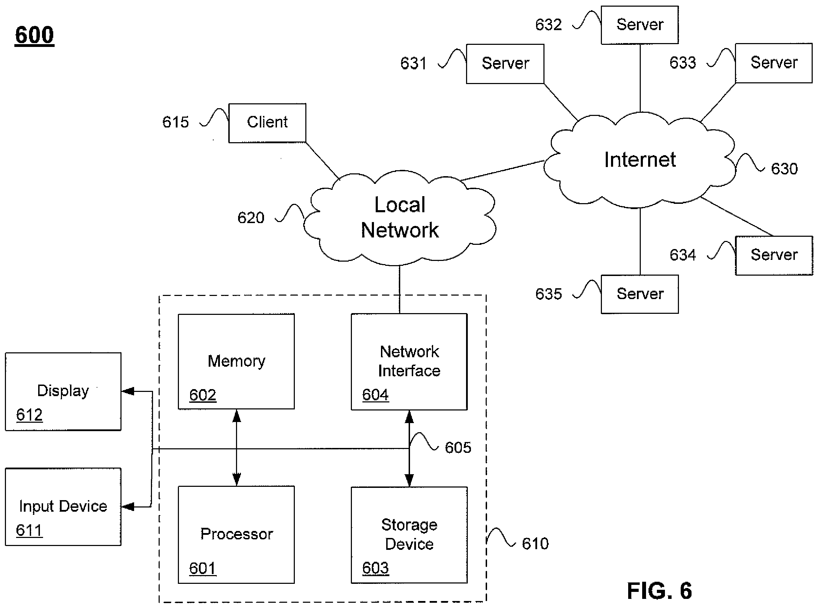

Fig. 6 illustrates hardware of a special purpose computing machine configured with an event-based regulatory compliance system according to one embodiment. An example computer system 610 is illustrated in Fig. 6. Computer system 610 includes a bus 605 or other communication mechanism for communicating information, and a processor 601 coupled with bus 605 for processing information. Computer system 610 also includes a memory 602 coupled to bus 605 for storing information and instructions to be executed by processor 601, including information and instructions for performing the techniques described above, for example. This memory may also be used for storing variables or other intermediate information during execution of instructions to be executed by processor 601. Possible implementations of this memory may be, but are not limited to, random access memory (RAM), read only memory (ROM), or both. A storage device 603 is also provided for storing information and instructions. Common forms of storage devices include, for example, a hard drive, a magnetic disk, an optical disk, a CD-ROM, a DVD, a flash memory, a USB memory card, or any other medium from which a computer can read. Storage device 603 may include source code, binary code, or software files for performing the techniques above, for example. Storage device and memory are both examples of computer readable storage mediums.

Computer system 610 may be coupled via bus 605 to a display 612, such as a cathode ray tube (CRT) or liquid crystal display (LCD), for displaying information to a computer user. An input device 611 such as a keyboard and/or mouse is coupled to bus 605 for communicating information and command selections from the user to processor 601. The combination of these components allows the user to communicate with the system. In some systems, bus 605 may be divided into multiple specialized buses.

Computer system 610 also includes a network interface 604 coupled with bus 605. Network interface 604 may provide two-way data communication between computer system 610 and the local network 620. The network interface 604 may be a digital subscriber line (DSL) or a modem to provide data communication connection over a telephone line, for example. Another example of the network interface is a local area network (LAN) card to provide a data communication connection to a compatible LAN. Wireless links are another example. In any such implementation, network interface 604 sends and receives electrical, electromagnetic, or optical signals that carry digital data streams representing various types of information.

Computer system 610 can send and receive information through the network interface 604 across a local network 620, an Intranet, or the Internet 630. In the Internet example, software components or services may reside on multiple different computer systems 610 or servers 631-635 across the network. The processes described above may be implemented on one or more servers, for example. A server 631 may transmit actions or messages from one component, through Internet 630, local network 620, and network interface 604 to a component on computer system 610. The software components and processes described above with respect to the event-based regulatory compliance system may be implemented on any computer system and send and/or receive information across a network, for example.

As used in the description herein and throughout the claims that follow, "a", "an", and "the" includes plural references unless the context clearly dictates otherwise. Also, as used in the description herein and throughout the claims that follow, the meaning of "in" includes "in" and "on" unless the context clearly dictates otherwise.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents may be employed without departing from the scope of the invention as defined by the claims.

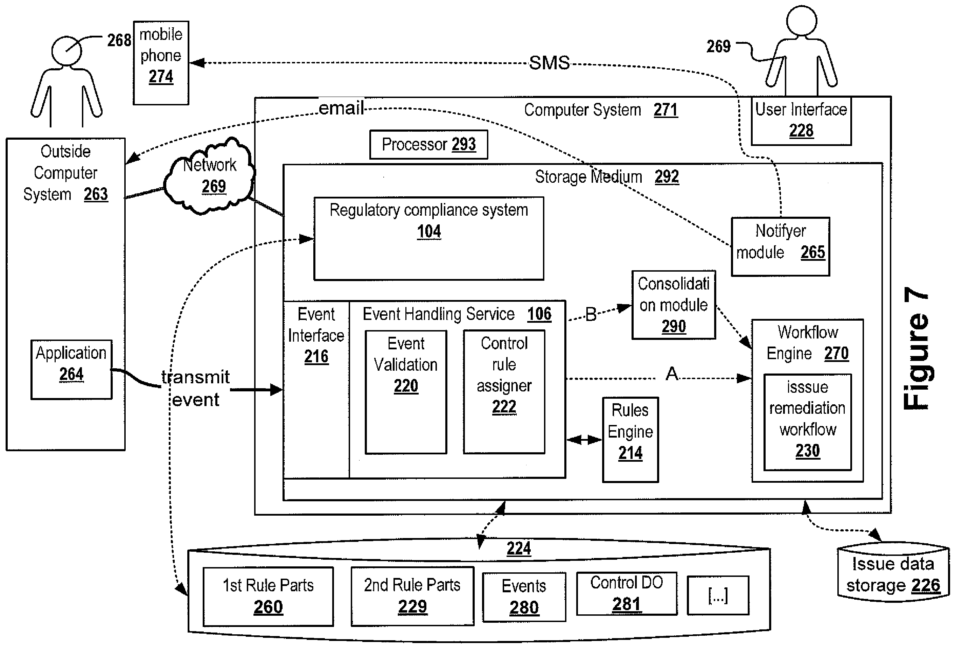

Figure 7 depicts a block diagram of a first computer system 271 being connected over a network 269 to an outside computer system 263. The outside computer system 263 comprises an application 264 which generates one or more events and transmits the events via the network 269 to the event interface 216 of the first computer system. The event interface 216 may be, for example, a web service and the transmitted events may be contained in one or more XML documents. The first computer system comprises a user interface 228, e.g. a graphical user interface, allowing a user 269 to inspect events flagged as non-compliance events, to configure the workflow engine or the like. Further, the first computer system comprises an event handling service application 106, said application comprising an event validation module 220 and a control rule assigner module is 222.

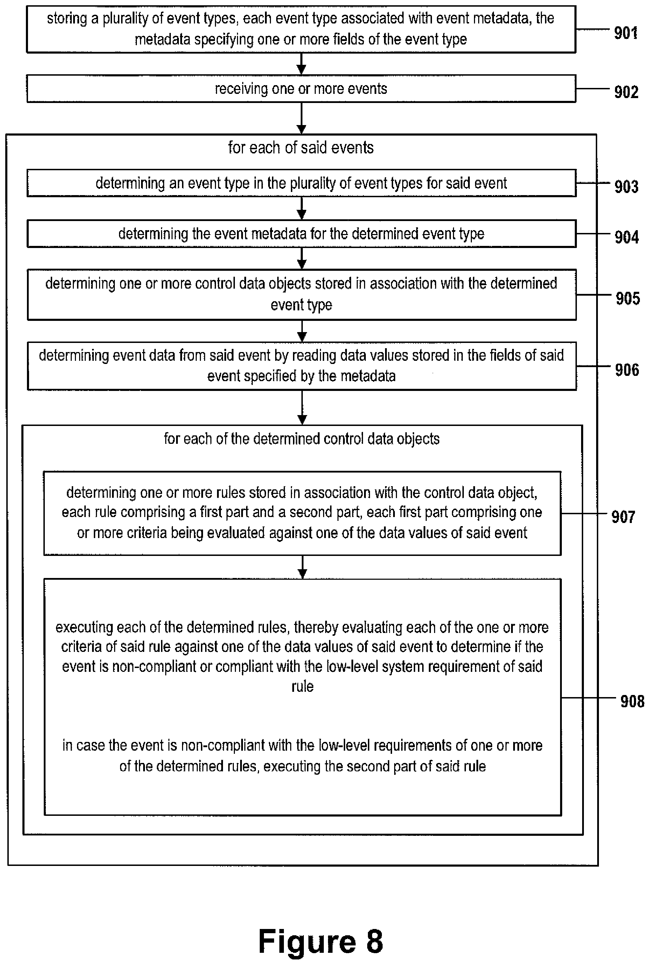

A regulatory compliance system 104 is part of or is interoperable with the event handling service 106. Further, the first computer system comprises a rules engine 214, a workflow engine 270 and a notifier module 265. A first database 224 comprises in a first table 260 the first rule parts, comprises the second rule parts in a second table 229, and may also comprise the events, control data objects and other data objects of an object-relational model of the regulatory compliance system 104 in various separate tables 280, 281. In the following, the operational steps depicted in figure 8 will be described by making reference to the elements of figure 7. At first, in step 901, a plurality of event types is stored in a first database 224. The first database comprises control data objects, first and second parts of the rules, event metadata and other data objects being part of an entity relationship model used by the regulatory compliance system 104. The first database may be, for example, a relational database such as MySQL or PostgreSQL. Then, in step 902, one or more events are received by the computer system 271 via event interface 216 from the outside computer system 263. The received events are stored to the first database, also referred to as 'event data storage'. Upon storing each of the received events to the first database, said event may have assigned a timestamp, the timestamp being stored in association with the event in the first database. According to some embodiments, the stored event may be immediately evaluated by the rules engine afterwards. According to other embodiments, a plurality of events is stored in the first database and collected in the first database until a first time period elapses. For example, a predefined time period of 15 minutes may be used.

According to embodiments, the moment of storing the first events to the first database is used as the begin of the time period. As soon as the time period has elapsed, all events having been stored to the first database during said time period are determined by evaluating the timestamps of the stored events by the event handling service. According to other embodiments, a batch job may be repeatedly executed at predefined time intervals, whereby all the newly added events are selectively retrieved by the batch job from the first database and forwarded to the rules engine. Thus, the method steps 903-908 are not executed for each single received event immediately, but are executed only once per predefined time period on a plurality of received events.

This may be advantageous, because less processing power is required for instantiating classes and modules executing the methods depicted in figure 8 and because the number of queries to the first database can be reduced.

According to some embodiments, each event is stored in the first database and evaluated by the rules engine without waiting to receive additional events from the event interface 216.

For each of said events, an event type is determined in step 904. This can be done, for example, in dependence on the interface used for receiving the event, in dependence on an identifier or address of the outside computer system, in dependence on the format of the received event or the like. The determination of the event type for each event is executed by the event handling service 106 being operable to access the first database 224. Depending on the embodiment, the first database may be part of or be operatively coupled to the first computer system. In the latter case, it may be accessible via a network.

The control rule assignment module then in step 905 determines one or more control data objects stored in the first database in association with the determined event type. In step 906, the event data of said event is determined by the event handling service by reading data values stored in fields of said event, the fields being specified in the metadata stored in association with the event type of said event. According to embodiments, each field corresponds to a column in the events table 280. For each of the control data objects determined in step 905, the steps 907-908 are executed in respect to said event. In step 907, one or more rules stored in association with the control data object in the first database are determined by the rules engine. Each rule comprises a first part and a second part. Each first part comprises one or more criteria being evaluated against one of the data values of said event. In step 908, each of the determined rules is executed. This comprises at least the step of evaluating each of the one or more criteria of said rule against one of the data values of that event to determine if the event is non-compliant or compliant with the low-level system requirement of said rule. In case the event is non-compliant with the low-level system requirements, the second part of said rule is executed by the rules engine.

Executing the second rule part may trigger the execution of an issue remediation workflow 270 by the workflow engine 270 in order to remedy the issue corresponding to the determined non-compliance event. Executing the issue remediation workflow 230 may comprise automatically submitting, by the notifier module 265, an e-mail to the outside computer system 263 arldlor automatically submitting an SMS to a mobile phone 274 of an operator 268 of the outside computer system 263 or to the mobile device of any other user being operable to remedy that issue. According to embodiments, one or more outbound interfaces 232 are used for communicating the notification to the recipient, e.g. a web service interface, an SMS interface, an e-mail communication interface and the like. According to embodiments, the interface to be used and the contact details such as IP address, database URL, port number, e-mail address, phone number and the like are stored as part of or in association with the pointer being contained in the second rule part.

The event handling service 106 is interactive with or comprises rules engine 214 which is used for evaluating the one or more rules on the events. Executing the one or more rules may immediately trigger the execution of one or more issue remediation workflows 230 by the workflow engine 270 as indicated by the dotted arrow 'A'.

According to some embodiments, the computer system further comprises a consolidation module 290 being operable to receive and collect a plurality of evaluated events from the event handling service 106. This embodiment is depicted in figure 7 by the dotted arrow 'B'. The consolidation module automatically determines whether some of the received and evaluated events may render the initiation of a remediation workflow necessary.

For example, a control system of a power plant may monitor the pressure and temperature of the power generating machinery and submit events via event interface 216 on a regular basis. In case it was determined by the event handling service 106 that a plurality of events are non-compliant in respect to a maximum allowed temperature constraint, typically a notification message to a technician of the power plant is automatically submitted by the notifier module 256. However, as is often the case with dynamically changing and complexly regulated systems such as power plants, every regulation step with salads effect only with a certain delay. Thus, a warning may be submitted to the technician although the power plant has already down regulated the temperature successfully. According to embodiments comprising a 290, said kind of unnecessary notifiers can be avoided by collectively evaluating a plurality of evaluated events and the timestamp information stored in association with each of said event in the first database 224. For example, if 50 events were received during 5.30 -5.45 a.m., 40 of them indicating that the temperature has risen above 500°C, 10 of them indicating that the temperature lies within a permissible temperature range, evaluates the time stamp having been assigned to each event upon storing the received event in the first database. In case the consolidation module determines that the timestamp of the events indicating a permissible temperature are older than the timestamps of the 40 events indicating an inadmissibly high temperature, a warning message is submitted by the consolidation module to the technician being indicative of a rising temperature. However, in case the consolidation module determines that the time stamp of the events indicating a permissible temperature are younger than the timestamps of said 40 events comprising an inadmissibly high temperature value, issuing a notification message is prohibited, thus reducing the network traffic and avoiding to disturb the technician was irrelevant warning messages. Using a consolidation module in combination with collecting the received event in the first database is particularly advantageous, because for the one hand, the consolidation module requires the timestamp information assigned to each event when storing the received event in the database. In addition, the consolidation module can only work on a plurality of events to be compared. Therefore, collecting the events in the first database and analyzing the evaluated events by the consolidation module provides a synergistic effect resulting in an overall reduction of processing time, network traffic and user disturbance.

## Claims

1. A computer-implemented method comprising:
- storing a (901) plurality of event types, each event type being a class of events and being stored in association with event metadata (218), the metadata characterizing the event type and specifying one or more fields of the event type;
- receiving (902) one or more events via a network interface (216);
- for each of said events:
- determining (903) an event type in the plurality of event types for said event;
- determining (904) the event metadata for the determined event type;
- determining (905) one or more control data objects stored in association with the determined event type, each of the one or more control data objects representing a regulation, each regulation being an operational constraint of a system, the determined control data objects relating to different hierarchical levels of said system;
- determining (906) event data from said event by reading data values stored in the fields of said event specified by the metadata;
- for each of the determined control data objects, determining (907) one or more rules stored in association with the control data object, each rule having the function to evaluate compliance of an event with a regulatory compliance issue being particular to said rule, wherein each regulatory compliance issue is an operational constraint of said system, each rule comprising a first part and a second part, each first part comprising one or more criteria being evaluated against one of the data values of said event; and
- executing (908) each of the determined rules, thereby evaluating each of the one or more criteria of said rule against one of the data values of said event to determine if the event is non-compliant or compliant with the regulatory compliance issue of said rule, wherein in case the event is compliant with the regulatory compliance issue of said rule, the event is also compliant with the regulation of the control data object for which said rule was determined, and wherein in case the event is non-compliant with the regulatory compliance issue of said rule, the event is also non-compliant with the regulation of the control data object for which said rule was determined;
in case it was determined that the event is non-compliant with the regulatory compliance issues of one or more of said rules, the second part of each of said rules is executed.

2. The computer-implemented method of claim 1, wherein the one or more events are stored to a first table (280) of a first database and the first parts of the rules are stored in a second table (229) of the first database and wherein the first database is operatively coupled to a event handling service (106), wherein the second part of each of the rules comprises a pointer linking to one or more executable instructions, wherein in case it was determined that the event is non-compliant with the regulatory compliance issues of one or more of said rules, the pointer of said rule is automatically selected, thereby triggering the execution of said one or more instructions.

3. The computer-implemented method of claim 2,
- wherein upon storing each of the events to the first database (224) a time stamp is stored in association with said event;
- wherein the received events are collected in the first database during a predefined time period;
- wherein the execution of the steps of determining the event type, determining the event metadata, determining the one or more control data objects and determining and executing the one or more rules is triggered after said predefined time period has elapsed, said steps being executed selectively on events having a younger time stamp than a reference moment, the reference moment being calculates as current system time minus the predefined time period.

4. The computer-implemented method of anyone of the previous claims, wherein determining each of the one or more control data objects comprises:
- determining a first link between the event type and the control data object; and
- determining a second link between the control data object and each of the one or more rules,
- wherein the first link belongs to a plurality of first links connecting event types and control data objects in accordance with a many-to-many relationship, and
- wherein the second link belongs to a plurality of second links connecting control data objects and rules in accordance with a many-to-many relationship, the first and second links being determined dynamically by a control rule assigner module.

5. The computer-implemented method of anyone of the preceding claims, wherein each control data object and each rule is stored in association with a business process and wherein each control data object and each rule is respectively stored in association with an organization unit data object, wherein the method preferentially in addition comprises the step of validating the event data of each of the events to determine if the event data of said event is in a valid format for evaluating.

6. The computer-implemented method of claim 2, further comprising:
- determining if a number of events stored in the first database (224) is above a threshold;
- changing a reference value of at least one of the criteria used to evaluate events if the first database is above the threshold to cause a percentage of events determined to be non-compliant to decrease; and
- changing the reference value of at least one of the criteria used to evaluate the event if the event data storage is below the threshold to cause the percentage of events determined to be non-compliant to increase.

7. The computer-implemented method of anyone of the preceding claims, wherein executing the second part of at least some of the rules comprises outputting remediation information associated with one of the events if said event is determined to be non-compliant.

8. The computer-implemented method of anyone of the preceding claims, wherein the event is received from an outside system (263) via a network (269) through an event interface (216).

9. The computer-implemented method of anyone of the preceding claims, wherein executing the second part of at least some of the rules comprises triggering a workflow (230) to perform predetermined actions for remediating the event if the event is determined to be non-compliant.

10. The computer-implemented method of claim 9, wherein executing the workflow comprises communicating, by a notifyer module (265), with the outside system (263) to notify the outside system that the event was non-compliant with the regulatory compliance issue of said rule if the event is determined to be non-compliant

11. The computer-implemented method of claim 2, wherein each of the rules is assembled dynamically before executing said rule, each of said rules being assembled from a rule template of said rule and from structural data contained in the metadata of the event types of the event to be evaluated, wherein said structural data comprises a mapping of fields of the event type of the event to be evaluated to columns of the first table (280), wherein said rule template comprises a placeholder for each of the rule's criteria, the placeholders of each rule being connected to each other via one or more operators, and wherein the assembly comprises inserting into each of the placeholders of said rule template one of the data values retrieved from the first table by creating database queries based on the mapping contained the metadata of the event type of the event to be evaluated.

12. The computer-implemented method of claim 11, wherein the pointer and its corresponding second rule part is selected from a group of pairs, each pair comprising a pointer and a second rule part, said group consisting of:
- an URL - a program script or application executed upon selection of said URL;
- an URL in combination with a mobile phone number of a user (268, 269) - program routines for sending a SMS message to said mobile phone number, and
- an URL in combination with an e-mail address - program routines for sending an e-mail to said e-mail address.

13. The computer-implemented method of anyone of claims 9-12, wherein the executed workflow belongs to a plurality of workflows stored to the first database (224), each workflow being stored in association with an identifier of at least one of the event types, and wherein triggering the workflow when executing the second part of said rule comprises determining the one or more workflows stored in association with the event type of the evaluated event.

14. A computer-readable storage medium containing instructions for controlling a computer system to perform the steps of anyone of the claims 1-13.

15. A computer-system (271) comprising:
- one or more computer processors (293);
- a computer-readable storage medium(292);
- a first database (224) being operatively coupled to the computer-system;
- an event handling service (106) comprising an event validation module (220) and a control rule assigner module (222);
- a rules engine (214);
- an event interface (216);
wherein the event handling service is operable to store (901) a plurality of event types in association with event metadata (218) in the first database, each event type being a class of events and the metadata characterizing the event type and specifying one or more fields of the event type; to receive (902, 302) one or more events via the network interface (216);
for each of said events, to determine (903, 304) an event type in the plurality of event types for said event; to determine (904, 306) the event metadata for the determined event type; and to determine (906) event data from said event by reading data values stored in the fields of said event specified by the metadata;
wherein the control rule assignment module is operable to determine (905) one or more control data objects stored in association with the determined event type, each of the one or more control data objects representing a regulation, each regulation being an operational constraint of a system, the determined control data objects relating to different hierarchical levels of said system;
wherein the rule engine is operable, for each of the determined control data objects, to determine (907) one or more rules stored in association with the control data object, each rule having the function to evaluate compliance of an event with a regulatory compliance issue being particular to said rule, wherein each regulatory compliance issue is an operational constraint of said system, each rule comprising a first part and a second part, each first part comprising one or more criteria being evaluated against one of the data values of said event; and to execute (908, 406) each of the determined rules, thereby evaluating each of the one or more criteria of said rule against one of the data values of said event to determine if the event is non-compliant or compliant with the regulatory compliance issue of said rule, wherein in case the event is compliant with the regulatory compliance issue of said rule, the event is also compliant with the regulation of the control data object for which said rule was determined, and wherein in case the event is non-compliant with the regulatory compliance issue of said rule, the event is also non-compliant with the regulation of the control data object for which said rule was determined; in case it was determined that the event is non-compliant with the regulatory compliance issues of one or more of said rules, the second part of each of said rules is executed.

## Patentansprüche

1. Computerimplementiertes Verfahren, umfassend:
- Speichern (901) mehrerer Ereignistypen, wobei jeder Ereignistyp für eine Klasse von Ereignissen steht und in Verbindung mit Ereignismetadaten (218) gespeichert wird, wobei die Metadaten den Ereignistyp charakterisieren und eines oder mehrere Felder des Ereignistyps spezifizieren;
- Empfangen (902) eines oder mehrerer Ereignisse über eine Netzwerkschnittstelle (216);
- für jedes der Ereignisse:
- Bestimmen (903) eines Ereignistyps unter den mehreren Ereignistypen für das Ereignis;
- Bestimmen (904) der Ereignismetadaten für den bestimmten Ereignistyp;
- Bestimmen (905) eines oder mehrerer, in Verbindung mit dem bestimmten Ereignistyp gespeicherter Steuerdatenobjekte, wobei das eine oder jedes von den mehreren Steuerdatenobjekten jeweils eine Vorschrift darstellt, wobei jede Vorschrift eine operative Beschränkung eines Systems darstellt, wobei die bestimmten Steuerdatenobjekte verschiedene hierarchische Ebenen des Systems betreffen;
- Bestimmen (906) von Ereignisdaten aus dem Ereignis, durch Lesen von Datenwerten, die in den von den Metadaten spezifizierten Feldern des Ereignisses gespeichert sind;
- Bestimmen (907) einer oder mehrerer, in Verbindung mit dem Steuerdatenobjekt gespeicherter Regeln für jedes der bestimmten Steuerdatenobjekte, wobei jede Regel die Funktion hat, die Konformität eines Ereignisses mit einer Vorschrifteneinhaltungsforderung, die für die Regel spezifisch ist, zu evaluieren, wobei jede Vorschrifteneinhaltungsforderung eine operative Beschränkung des Systems darstellt, wobei jede Regel einen ersten Teil und einen zweiten Teil umfasst, wobei jeder erste Teil ein oder mehrere Kriterien umfasst, die gegen einen der Datenwerte des Ereignisses evaluiert werden; und
- Ausführen (908) von jeder der bestimmten Regeln, um dadurch das eine oder jedes von den Kriterien der Regel gegen einen der Datenwerte des Ereignisses zu evaluieren, um zu bestimmen, ob das Ereignis nicht konform ist oder konform ist mit der Vorschrifteneinhaltungsforderung der Regel, wobei in dem Fall, dass das Ereignis konform ist mit der Vorschrifteneinhaltungsforderung der Regel, das Ereignis ebenfalls konform ist mit der Vorschrift des Steuerdatenobjekts, für welches die Regel bestimmt wurde, und wobei in dem Fall, dass das Ereignis nicht konform ist mit der Vorschrifteneinhaltungsforderung der Regel, das Ereignis ebenfalls nicht konform ist mit der Vorschrift des Steuerdatenobjekts, für das die Regel bestimmt wurde;
wobei in dem Fall, dass bestimmt wurde, dass das Ereignis nicht konform ist mit den Vorschrifteneinhaltungsforderungen einer oder mehrerer der Regeln, der zweite Teil von jeder der Regeln ausgeführt wird.

2. Computerimplementiertes Verfahren nach Anspruch 1, wobei das eine oder die mehreren Ereignisse in einer ersten Tabelle (280) einer ersten Datenbank gespeichert wird bzw. werden, und die ersten Teile der Regeln in einer zweiten Tabelle (229) der ersten Datenbank gespeichert werden, und wobei die erste Datenbank operativ mit einem Ereignisbehandlungsdienst (106) gekoppelt ist, wobei der zweite Teil von jeder der Regeln einen Zeiger beinhaltet, der eine Verknüpfung mit einer oder mehreren ausführbaren Anweisungen herstellt, wobei in einem Fall, wo bestimmt worden ist, dass das Ereignis nicht konform ist mit den Vorschrifteneinhaltungsforderungen von einer oder mehreren der Regeln, der Zeiger dieser Regel automatisch ausgewählt wird, wodurch die Ausführung der einen oder der mehreren Anweisungen ausgelöst wird.

3. Computerimplementiertes Verfahren nach Anspruch 2,
- wobei beim Speichern der einzelnen Ereignisse in der ersten Datenbank (224) ein Zeitstempel in Verbindung mit dem Ereignis gespeichert wird;
- wobei die empfangenen Ereignisse während einer vordefinierten Zeitspanne in der ersten Datenbank gesammelt werden;
- wobei die Ausführung der Schritte des Bestimmens des Ereignistyps, des Bestimmens der Ereignismetadaten, des Bestimmens eines oder mehrerer Steuerdatenobjekte und des Bestimmens und Ausführens der einen oder der mehreren Regeln ausgelöst wird, nachdem die vordefinierte Zeitspanne abgelaufen ist, wobei die Schritte selektiv an Ereignissen ausgeführt werden, die einen jüngeren Zeitstempel tragen als ein Bezugszeitpunkt, wobei der Bezugszeitpunkt als aktuelle Systemzeit minus der vordefinierten Zeitspanne berechnet wird.

4. Computerimplementiertes Verfahren nach einem der vorangehenden Ansprüche, wobei das Bestimmen von dem einen oder von jedem von den mehreren Steuerdatenobjekten umfasst:
- Bestimmen einer ersten Verknüpfung zwischen dem Ereignistyp und dem Steuerdatenobjekt; und
- Bestimmen einer zweiten Verknüpfung zwischen dem Steuerdatenobjekt und der einen oder jeder von den mehreren Regeln,
- wobei die erste Verknüpfung zu einer Mehrzahl erster Verknüpfungen gehört, die Ereignistypen und Steuerdatenobjekte gemäß einer m:n-Beziehung verbinden, und
- wobei die zweite Verknüpfung zu einer Mehrzahl zweiter Verknüpfungen gehört, die Steuerdatenobjekte und Regeln gemäß einer m:n-Beziehung verbinden, wobei die ersten und die zweiten Verknüpfungen von einem Steuerregelzuweisungsmodul dynamisch bestimmt werden.

5. Computerimplementiertes Verfahren nach einem der vorangehenden Ansprüche, wobei jedes Steuerdatenobjekt und jede Regel in Verbindung mit einem Geschäftsprozess gespeichert wird und wobei jedes Steuerdatenobjekt und jede Regel jeweils in Verbindung mit einem Organisationseinheitsdatenobjekt gespeichert wird, wobei das Verfahren vorzugsweise außerdem den Schritt der Validierung der Ereignisdaten von jedem der Ereignisse umfasst, um zu bestimmen, ob die Ereignisdaten des Ereignisses in einem für die Evaluierung validen Format vorliegen.

6. Computerimplementiertes Verfahren nach Anspruch 2, ferner umfassend:
- Bestimmen, ob eine Anzahl von Ereignissen, die in der ersten Datenbank (224) gespeichert sind, oberhalb eines Schwellenwerts liegt;
- Ändern eines Bezugswerts von mindestens einem der Kriterien, die verwendet werden, um Ereignisse zu evaluieren, wenn die erste Datenbank den Schwellenwert überschreitet, um zu bewirken, dass ein Prozentanteil an Ereignissen, die als nicht-konform bestimmt werden, kleiner wird; und
- Ändern des Bezugswerts von mindestens einem der Kriterien, die verwendet werden, um das Ereignis zu evaluieren, wenn der Ereignisdatenspeicher unterhalb des Schwellenwerts liegt, um zu bewirken, dass der Prozentanteil von Ereignisse, die als nicht-konform bestimmt werden, größer wird.

7. Computerimplementiertes Verfahren nach einem der vorangehenden Ansprüche, wobei das Ausführen des zweiten Teils von zumindest einigen der Regeln das Ausgeben vom Korrekturinformationen umfasst, die mit einem der Ereignisse assoziiert sind, wenn bestimmt wird, dass das Ereignis nicht konform ist.

8. Computerimplementiertes Verfahren nach einem der vorangehenden Ansprüche, wobei das Ereignis über ein Netzwerk (269) durch eine Ereignisschnittstelle (216) von einem externen System (263) empfangen wird.

9. Computerimplementiertes Verfahren nach einem der vorangehenden Ansprüche, wobei das Ausführen des zweiten Teils von zumindest einigen der Regeln das Auslösen eines Workflows (230) umfasst, um vorgegebene Maßnahmen zum Korrigieren des Ereignisses durchzuführen, wenn bestimmt wird, dass das Ereignis nicht konform ist.

10. Computerimplementiertes Verfahren nach Anspruch 9, wobei das Ausführen des Workflows das Kommunizieren des Benachrichtigungsmoduls (265) mit dem externen System (263) umfasst, um dem externen System zu melden, dass das Ereignis nicht konform war mit der Vorschrifteneinhaltungsforderung der Regel, wenn bestimmt wird, dass das Ereignis nicht konform ist.

11. Computerimplementiertes Verfahren nach Anspruch 2, wobei jede von den Regeln dynamisch assembliert wird, bevor die Regel ausgeführt wird, wobei jede der Regeln aus einem Regel-Template der Regel und aus Strukturdaten, die in den Metadaten der Ereignistypen des zu evaluierenden Ereignisses enthalten sind, assembliert wird, wobei die Strukturdaten eine Abbildung von Feldern des Ereignistyps des zu evaluierenden Ereignisses auf Spalten der ersten Tabelle (280) umfasst, wobei das Regel-Template einen Platzhalter für jedes der Kriterien der Regel umfasst, wobei die Platzhalter der einzelnen Regeln über einen oder mehrere Operatoren miteinander verknüpft sind und wobei das Assemblieren das Einfügen von einem der Datenwerte, die durch Erzeugen von Datenbankabfragen auf Basis der Abbildung, die in den Metadaten des Ereignistyps des zu evaluierenden Ereignisses enthalten sind, aus der ersten Tabelle abgerufen werden, in die einzelnen Platzhalter des Regel-Template umfasst.

12. Computerimplementiertes Verfahren nach Anspruch 1, wobei der Zeiger und sein entsprechender zweiter Regelteil ausgewählt werden aus einer Gruppe von Paaren, wobei jedes Paar einen Zeiger und einen zweiten Regelteil umfasst, wobei die Gruppe aus Folgendem besteht:
- einer URL - einem Programmskript oder einer Anwendung, das bzw. die nach Auswahl der URL ausgeführt wird;
- einer URL in Kombination mit einer Mobiltelefonnummer eines Anwenders (268, 269) - Programmroutinen zum Senden einer SMS-Nachricht an die Mobiltelefonnummer, und
- einer URL in Kombination mit einer E-Mail-Adresse - Programmroutinen zum Senden einer E-Mail an die E-Mail-Adresse.

13. Computerimplementiertes Verfahren nach einem der Ansprüche 9-12, wobei der ausgeführte Workflow zu einer Mehrzahl von Workflows gehört, die in der ersten Datenbank (224) gespeichert sind, wobei jeder Workflow in Verbindung mit einer Kennung von mindestens einem der Ereignistypen gespeichert wird, und wobei das Auslösen des Workflows, wenn der zweite Teil der Regel ausgeführt wird, das Bestimmen des einen oder der mehreren Workflows, die in Verbindung mit dem Ereignistyp des evaluierten Ereignisses gespeichert sind, umfasst.

14. Computerlesbares Speichermedium, das Anweisungen zum Steuern eines Computersystems umfasst, um die Schritte nach einem der Ansprüche 1-13 durchzuführen.

15. Computersystem (271), umfassend:
- einen oder mehrere Computerprozessoren (293);
- ein computerlesbares Speichermedium (292);
- eine erste Datenbank (224), die operativ mit dem Computersystem gekoppelt ist;
- einen Ereignisbehandlungsdienst (106), der ein Ereignisvalidierungsmodul (220) und ein Steuerregelzuweisungsmodul (222) umfasst;
- eine Regel-Engine (214);
- eine Ereignisschnittstelle (216);
wobei der Ereignisverarbeitungsdienst dazu dient, eine Mehrzahl von Ereignistypen in Verbindung mit Ereignismetadaten (218) in der ersten Datenbank zu speichern (901), wobei jeder Ereignistyp eine Klasse von Ereignissen darstellt und die Metadaten den Ereignistyp charakterisieren und ein oder mehrere Felder des Ereignistyps spezifizieren; ein oder mehrere Ereignisse über die Netzwerkschnittstelle (216) zu empfangen (902, 302); für jedes der Ereignisse einen Ereignistyp aus der Mehrzahl von Ereignistypen für dieses Ereignis zu bestimmen (903, 304); die Ereignismetadaten für den bestimmten Ereignistyp zu bestimmen (904, 306); und durch Lesen von Datenwerten, die in den von den Metadaten spezifizierten Feldern des Ereignisses gespeichert sind, Ereignisdaten aus dem Ereignis zu bestimmen (906);
wobei das Steuerregelzuweisungsmodul dazu dient, ein oder mehrere Steuerdatenobjekte zu bestimmen (905), die in Verbindung mit dem bestimmten Ereignistyp gespeichert werden, wobei das eine oder jedes von den mehreren Steuerdatenobjekten eine Vorschrift darstellt, wobei jede Vorschrift eine operative Beschränkung eines Systems darstellt, wobei die bestimmten Steuerdatenobjekte unterschiedliche hierarchische Ebenen des Systems betreffen;
wobei die Regel-Engine dazu dient, für jedes von den bestimmten Steuerdatenobjekten eine oder mehrere Regeln zu bestimmen (907), die in Verbindung mit dem Steuerdatenobjekt gespeichert wird bzw. werden, wobei jede Regel die Funktion hat, die Konformität eines Ereignisses mit einer Vorschrifteneinhaltungsforderung, die für diese Regel spezifisch ist, zu evaluieren, wobei jede Vorschrifteneinhaltungsforderung eine operative Beschränkung des Systems darstellt, wobei jede Regel einen ersten Teil und einen zweiten Teil umfasst, wobei jeder erste Teil ein oder mehrere Kriterien umfasst, die gegen einen der Datenwerte des Ereignisses evaluiert werden; und jede der bestimmten Regeln auszuführen (908, 406), wodurch das eine oder jedes von den mehreren Kriterien der Regel gegen einen von den Datenwerten des Ereignisses evaluiert wird, um zu bestimmen, ob das Ereignis nicht-konform oder konform ist mit der Vorschrifteneinhaltungsforderung der Regel, wobei in dem Fall, dass das Ereignis konform ist mit der Vorschrifteneinhaltungsforderung der Regel, das Ereignis ebenfalls konform ist mit der Vorschrift des Steuerdatenobjekts, für das die Regel bestimmt wurde, und wobei in dem Fall, dass das Ereignis nicht konform ist mit der Vorschrifteneinhaltungsforderung, das Ereignis auch nicht konform ist mit der Vorschrift des Steuerdatenobjekts, für das die Regel bestimmt wurde; wobei in dem Fall, dass bestimmt wurde, dass das Ereignis nicht konform ist mit der Vorschrifteneinhaltungsforderung von einer oder mehreren von den Regeln, der zweite Teil von jeder dieser Regeln ausgeführt wird.

## Revendications

1. Procédé mis en oeuvre par ordinateur comprenant :
- le stockage (901) d'une pluralité de types d'évènements, chaque type d'événement étant une classe d'événements et étant stocké en association avec des métadonnées d'événement (218), les métadonnées caractérisant le type d'événement et définissant un ou plusieurs domaines du type d'évènement ;
- la réception (902) d'un ou de plusieurs événements par l'intermédiaire d'une interface de réseau (216) ;
- pour chacun desdits événements :
- la détermination (903) d'un type d'événement parmi la pluralité des types d'événements pour ledit évènement ;
- la détermination (904) des métadonnées d'événement pour le type d'événement déterminé ;
- la détermination (905) d'un ou de plusieurs objets de donnée de commande stocké(s) en association avec le type d'événement déterminé, chacun parmi le ou les objets de donnée de commande représentant une réglementation, chaque réglementation étant une contrainte opérationnelle d'un système, les objets de données de commande déterminés concernant différents niveaux hiérarchiques dudit système ;
- la détermination (906) de données d'événement à partir dudit événement en lisant des valeurs de données stockées dans les domaines dudit évènement définis par les métadonnées ;
- pour chacun des objets de données de commande déterminé, la détermination (907) d'une ou de plusieurs règles stockées en association avec l'objet de données de commande, chaque règle ayant la fonction pour évaluer une conformité d'un événement avec une question de conformité réglementaire étant particulière pour ladite règle, où chaque question de conformité réglementaire est une contrainte opérationnelle dudit système, chaque règle comprenant une première partie et une seconde partie, chaque première partie comprenant un ou plusieurs critères étant évalués vis-à-vis d'une des valeurs de données dudit évènement ; et
- l'exécution (908) de chacune des règles déterminées, en évaluant ainsi chacun parmi le ou les critères de ladite règle vis-à-vis d'une des valeurs de données dudit événement pour déterminer si l'événement est non conforme ou conforme à la question de conformité réglementaire de ladite règle, où, dans le cas où l'événement est conforme avec la question de conformité réglementaire de ladite règle, l'événement est également conforme avec la réglementation de l'objet de donnée de commande pour laquelle ladite règle a été déterminée, et où, dans le cas où l'événement est non conforme avec la question de conformité réglementaire de ladite règle, l'événement est également non conforme avec la réglementation de l'objet de donnée de commande pour laquelle ladite règle a été déterminée ; dans le cas où il a été déterminé que l'événement est non conforme avec les questions de conformité réglementaires de l'une ou de plusieurs desdites règles, la seconde partie de chacune desdites règles est exécutée.

2. Procédé mis en oeuvre par ordinateur selon la revendication 1, dans lequel le ou les événements sont stockés dans un premier tableau (280) d'une première base de données et les premières parties des règles sont stockées dans un second tableau (229) de la première base de données et où la première base de données est couplée de manière opérationnelle à un service de traitement d'événement (106), où la seconde partie de chacune des règles comprend un pointeur de liaison vers une ou plusieurs instructions exécutables, où, dans le cas où il a été déterminé que l'événement est non conforme avec les questions de conformité réglementaires de l'une ou desdites règles, le pointeur de ladite règle est automatiquement choisi, déclenchant ainsi l'exécution de ladite ou desdites instructions.

3. Procédé mis en oeuvre par ordinateur selon la revendication 2,
- dans lequel, lors du stockage de chacun des évènement dans la première base de données (224), un horodatage est stocké en association avec ledit évènement ;
- dans lequel, les événements réceptionnés sont collectés dans la première base de données durant une durée prédéfinie ;
- dans lequel l'exécution des étapes de détermination du type d'évènement , de détermination des métadonnées d'évènement, de détermination de l'objet ou des objets de données de commande et de détermination et d'exécution de la ou des règles est déclenchée lorsque ladite durée prédéfinie est passée, lesdites étapes étant exécutées de manière sélective sur des événements ayant un horodatage plus récent qu'un moment de référence, le moment de référence étant calculé sous la forme d'un temps système actuel moins la durée prédéfinie.

4. Procédé mis en oeuvre par ordinateur selon l'une quelconque des revendications précédentes, dans lequel la détermination de chacun parmi le ou les objets de données de commande comprend :
- la détermination d'un premier lien entre le type d'événement et l'objet de données de commande ; et
- la détermination d'un second lien entre l'objet de donnée de commande et chacune de la ou des règles,
- dans lequel le premier lien fait partie d'une pluralité de premiers liens mettant en communication des types d'événements et des objets de données de commande selon une relation multivoque, et
- dans lequel le second lien fait partie d'une pluralité de seconds liens mettant en relation des objets de donnée de commande et des règles selon une relation multivoque, les premier et second liens étant déterminés de manière dynamique par un module d'attribution de règle de commande.

5. Procédé mis en oeuvre par ordinateur selon l'une quelconque des revendications précédentes, dans lequel chaque objet de données de commande et chaque règle sont stockés en association avec un processus d'affaires et dans lequel chaque objet de donnée de commande et chaque règle sont respectivement stockés en association avec un objet de donnée d'unité d'organisation, où le procédé comprend de préférence de manière additionnelle l'étape de validation de la donnée d'événement de chacun des événements pour déterminer si la donnée d'événement dudit événement est dans un format valide pour l'évaluation.

6. Procédé mis en oeuvre par ordinateur selon la revendication 2, comprenant en outre :
- la détermination si un nombre d'événements stockés dans la première base de données (224) est supérieur à un seuil ;
- le changement d'une valeur de référence d'au moins un des critères utilisé pour évaluer des événements si la première base de données est supérieure au seuil pour faire en sorte qu'un pourcentage d'événements déterminés comme non conformes diminue ; et
- le changement de la valeur de référence d'au moins un des critères utilisé pour évaluer l'événement si le stockage de données d'événement est en dessous du seuil pour faire en sorte que le pourcentage d'événements déterminés être non conformes augmente.

7. Procédé mis en oeuvre par ordinateur selon l'une quelconque des revendications précédentes, dans lequel l'exécution de la seconde partie d'au moins quelques unes des règles comprend l'émission d'une information de renégociation associée avec l'un des événements si ledit événement est déterminé être non conforme.

8. Procédé mis en oeuvre par ordinateur selon l'une quelconque des revendications précédentes, dans lequel l'événement est reçu à partir d'un système extérieur (263) par le biais d'un réseau (269) par une interface d'événement (216).

9. Procédé mis en oeuvre par ordinateur selon l'une quelconque des revendications précédentes, dans lequel l'exécution de la seconde partie d'au moins quelques unes des règles comprend un déclenchement d'un flux de tâches (230) pour effectuer des actions prédéterminées pour renégocier l'événement si l'événement est déterminé être non conforme.

10. Procédé mis en oeuvre par ordinateur selon la revendication 9, dans lequel l'exécution du flux de tâches comprend la communication, par un module de notification (265), avec le système extérieur (263), de notifier au système extérieur que l'événement est non conforme avec la question de conformité réglementaire de ladite règle si l'événement est déterminé être non conforme.

11. Procédé mis en oeuvre par ordinateur selon la revendication 2, dans lequel chacune des règles est assemblée de manière dynamique avant l'exécution de ladite règle, chacune desdites règles étant assemblée à partir d'un modèle de règle de ladite règle et à partir de données de structure contenues dans les métadonnées des types d'événement de l'événement devant être évalué, dans lequel lesdites données de structure comprennent une cartographie des domaines du type d'événement de l'événement devant être évalué en colonnes du premier tableau (280), dans lequel ledit modèle de règle comprend une place réservée pour chacun des critères de règle, les places réservées de chaque règle étant reliées les unes aux autres par le biais d'un ou de plusieurs opérateurs, et dans lequel l'assemblage comprend l'insertion dans chacune des places réservées dudit modèle de règle d'une des valeurs de données retrouvée à partir du premier tableau en créant des demandes de base de données basées sur la cartographie contenue dans les métadonnées du type d'événement de l'événement devant être évalué.

12. Procédé mis en oeuvre par ordinateur selon la revendication 11, dans lequel le pointeur et sa seconde partie de règle correspondante est choisi dans un groupe de paires, chaque paire comprenant un pointeur et une seconde partie de règle, ledit groupe étant constitué :
- d'une écriture de programme d'URL ou d'une application exécutée par la sélection de ladite URL ;
- d'une URL en combinaison avec un numéro téléphonique mobile d'un utilisateur (268, 269) - de routines de programme pour l'envoi d'un message par SMS audit numéro de téléphone mobile, et
- une URL en combinaison avec une adresse e-mail - de routines de programme pour l'envoi d'un e-mail à ladite adresse e-mail.

13. Procédé mis en oeuvre par ordinateur selon l'une quelconque des revendications 9 à 12, dans lequel le flux de tâches exécuté fait partie d'une pluralité de flux de tâches stockés dans la première base de données (224), chaque flux de tâches étant stocké en association avec un identifieur de l'au moins un des types d'évènements, et dans lequel le déclenchement du flux de tâches lors de l'exécution de la seconde partie de ladite règle comprend la détermination du ou des flux de tâches stockés en association avec le type d'événement de l'événement évalué.

14. Support de stockage lisible par ordinateur contenant des instructions pour la commande d'un système informatique pour exécuter les étapes selon l'une quelconque des revendications 1 à 13.

15. Système informatique (271) comprenant :
- un ou plusieurs processeurs (293) d'ordinateur ;
- un support de stockage lisible par ordinateur (292) ;
- une première base de données (224) étant couplée de manière opérationnelle au système informatique ;
- un service de traitement d'événement (106) comprenant un module de validation d'événement (200) et un module d'attribution de règles de commande (222) ;
- un moteur de règles (214) ;
- une interface d'événement (216) ;
où le service de traitement d'événement peut fonctionner pour stocker (901) une pluralité de types d'événements en association avec des métadonnées d'événement (218) dans la première base de données, , chaque type d'événement étant une classe d'événements et les métadonnées caractérisant le type d'événement et définissant un ou plusieurs domaines du type d'évènement ; pour recevoir (902, 302) un ou plusieurs événements par le biais de l'interface de réseau (216) ; pour chacun desdits événements, pour déterminer (903, 304) un type d'événement dans la pluralité des types d'événement pour ledit évènement ; pour déterminer (904, 906) les métadonnées d'événement pour le type d'événement déterminé ; et pour déterminer (906) des données d'événement à partir dudit événement en lisant des valeurs de données stockées dans les domaines dudit événement définis dans les métadonnées ;
où le module d'attribution des règles de commande peut fonctionner pour déterminer (905) un ou plusieurs objets de données de commande stockés en association avec le type d'événement déterminé, chacun parmi le ou les objets de données de commande représentant une règlementation, chaque règlementation étant une contrainte opérationnelle d'un système, les objets de données de commande déterminés concernant différents niveaux hiérarchiques dudit système ;
où le moteur de règles peut fonctionner, pour chacun des objets de données de commande déterminés, pour déterminer (907) une ou plusieurs règles stockées en association avec l'objet de données de commande, chaque règle ayant la fonction pour évaluer une conformité d'un évènement avec une question de conformité réglementaire étant particulière à ladite règle, où chaque question de conformité réglementaire est une contrainte opérationnelle dudit système, chaque règle comprenant une première partie et une seconde partie, chaque première partie comprenant un ou plusieurs critères étant évalués par rapport aux valeurs de données dudit évènement ; et pour exécuter (908, 406) chacune des règles déterminées, en évaluant ainsi chacun parmi le ou les critères de ladite règle par rapport à une des valeurs de données dudit événement pour déterminer si l'événement est non conforme ou conforme avec la question de conformité réglementaire de ladite règle, où, dans le cas où l'événement est conforme avec la question de conformité réglementaire de ladite règle, l'événement est également conforme avec la réglementation de l'objet de données de commande pour lequel ladite règle a été déterminée, et où, dans le cas où l'événement est non conforme avec la question de conformité réglementaire de ladite règle, l'événement est également non conforme avec la réglementation de l'objet de données de commande pour lequel ladite règle a été déterminée ; dans le cas où il a été déterminé que l'événement est non conforme avec les questions de conformité réglementaires de l'une ou de plusieurs des règles, la seconde partie de chacune desdites règles est exécutée.
